(19) Europäisches Patentamt
European Patent Office
Office européen des brevets

(11) **EP 4 078 863 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **20838937.9**

(22) Anmeldetag: **16.12.2020**

(51) Internationale Patentklassifikation (IPC):
**H04J 3/06** (2006.01)   **G01D 4/00** (2006.01)
**H04L 12/40** (2006.01)

(52) Gemeinsame Patentklassifikation (CPC):
**H04J 3/0667; H04J 3/14; H04L 12/413;**
**H04L 43/0858;** G01D 2218/10

(86) Internationale Anmeldenummer:
**PCT/EP2020/086533**

(87) Internationale Veröffentlichungsnummer:
**WO 2021/122823 (24.06.2021 Gazette 2021/25)**

(54) **VERFAHREN ZUR PRÜFUNG DER GÜLTIGKEIT VON SENSORDATEN EINES ETHERNET-BORDNETZES**

METHOD OF CHECKING THE VALIDITY OF SENSORDATA OF AN ETHERNET-NETWORK OF A VEHICLE

PROCEDE DE VERIFICATION DE LA VALIDITÉ DES DONNÉES DE CAPTEURS DANS UN RESEAU ETHERTNET D'UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019 DE 102019220495**

(43) Veröffentlichungstag der Anmeldung:
**26.10.2022 Patentblatt 2022/43**

(73) Patentinhaber: **Continental Automotive Technologies GmbH**
**30175 Hannover (DE)**

(72) Erfinder: **ZINNER, Helge**
**60488 Frankfurt am Main (DE)**

(74) Vertreter: **Continental Corporation**
**c/o Continental Automotive Technologies GmbH**
**Intellectual Property**
**Guerickestraße 7**
**60488 Frankfurt a. Main (DE)**

(56) Entgegenhaltungen:
EP-A1- 2 759 174      EP-A1- 3 016 306
WO-A1-2019/081463   WO-A1-2019/197233
DE-A1- 102013 224 697   DE-A1- 102015 213 845
DE-A1- 102018 207 684

- **KARTHIK SRIDHARAN: "Investigation of Time-Synchronization over Ethernet In-Vehicle Networks for automotive applications", 26 October 2015 (2015-10-26), pages 1 - 86, XP055500814, Retrieved from the Internet <URL:https://pure.tue.nl/ws/files/46913850/8016 19-1.pdf> [retrieved on 20180820]**
- **SHREEJITH SHANKER: "Enhancing Automotive Embedded Systems with FPGAs", 1 January 2016 (2016-01-01), XP055597224, Retrieved from the Internet <URL:https://warwick.ac.uk/fac/sci/eng/staff/saf /publications/shreejith-phdthesis2016.pdf> DOI: 10.13140/RG.2.1.4001.1768**
- **RADU ONICA ET AL: "Fault-Tolerant Precision Time Protocol for Smart Grids", SIMPÓSIO DE INFORMÁTICA (INFORUM), 8 September 2015 (2015-09-08), Covilhã, Portugal, XP055538050**
- **HELGE ZINNER ET AL: "A comparison of time synchronization in AVB and FlexRay in-vehicle networks", INTELLIGENT SOLUTIONS IN EMBEDDED SYSTEMS (WISES), 2011 PROCEEDINGS OF THE NINTH WORKSHOP ON, IEEE, 7 July 2011 (2011-07-07), pages 67 - 72, XP032024137, ISBN: 978-1-4577-1550-1**

EP 4 078 863 B1

**Beschreibung**

Feld

Die vorliegende Erfindung betrifft ein Verfahren zur Prüfung der Gültigkeit von Sensordaten

Hintergrund

Automobilhersteller (OEM's) und Tier-1-Zulieferer der Automobilindustrie bereiten die nächste Generation der Architektur für Fahrzeugsteuerungen oder elektronische Steuergeräte / Steuereinheiten, ECU's, vor. Eine Entwicklung ist die sogenannte "Zonenorientierte Architektur", bei der Steuergeräte in Zonen gruppiert werden, wie z.B. eine vordere rechte Türzone. Ein Unterschied zu früheren Architekturen besteht darin, dass sich die Controller an bestimmten physikalischen oder räumlichen Positionen befinden, um die Daten der dort positionierten Sensoren optimal zu erfassen. So kann beispielsweise eine Steuereinheit, das Daten von einem Sensor in der rechten Vordertür sammelt, in der rechten Vordertürzone positioniert werden.

Ebenfalls in Betracht gezogen wird die Lokalisierung oder Verteilung der Softwareausführung für Features und Anwendungen auf andere Controller und Prozessoren. Eine solche Lokalisierung oder Verteilung kann Teil einer Optimierung sein und auch im Falle eines Fehlers oder eines Ausfalls, z.B. eines Steuergeräts, eingesetzt werden. Diese Lokalisierung oder Verteilung wird als dynamische Migration oder einfach als Migration bezeichnet. Die Serienproduktion für die dynamische Migration von Software auf andere Steuergeräte/Prozessoren innerhalb des Fahrzeugs wird in Kürze erwartet.

Ethernet kann das Netzwerk der Wahl für den Anschluss von Steuergeräten in einem Netzwerk sein. Die Ethernet-Technologie wird immer beliebter für die elektrischen Systeme von Fahrzeugen und Zulieferprodukten. Der Einsatz der Ethernet-Technologie erfordert ein effektives Synchronisationskonzept. Bestehende Ethernet-Systeme können eine Implementierung des Zeitsynchronisationsstandards IEEE 802.1AS verwenden. Zwei Varianten, die besondere Aufmerksamkeit erregt haben, sind die Auswahl der 802.1AS-Rev und der Zeitbereich der 802.1AS-Rev, wobei letzterer eine zwingende Voraussetzung für die erste ist. Weitere Protokolle außerhalb der physikalischen Übertragungsstandards sind Ethernet AVB und sein Nachfolger Ethernet TSN. Ethernet AVB wurde bereits für Automobile in der Serienproduktion eingeführt. Ein wesentlicher Substandard für Ethernet TSN und AVB ist der Zeitsynchronisationsstandard IEEE802.1AS, der vom Hauptstandard IEEE 802.1 für Higher Layer LAN Protokolle (Bridging) abhängig ist. Beide Standards nutzen das Precision Time Protocol (PTP) der IEEE 1588, um eine gemeinsame Zeitbasis in einem Ethernet-Netzwerk zu etablieren.

Ethernet-Verbindungen unterstützen auf dem Layer 3 des OSI-Schichtenmodells eine Vielzahl von Vermittlungsprotokollen für die Übertragung von Datenpaketen zwischen Sendern und Empfängern. In den höheren Protokollschichten erfolgt die Segmentierung des Datenstroms in Pakete, die Prozesskommunikation zwischen miteinander kommunizierenden Systemen, die Übersetzung von Daten in eine systemunabhängige Form und schließlich die Bereitstellung von Funktionen für Anwendungen.

Fast alle in Fahrzeugen eingesetzten Ethernet-Kommunikationsnetzwerke nutzen ein Protokoll zur Zeitsynchronisation, das eine in allen Netzwerkgeräten synchrone globale Zeitbasis des Netzwerks bereitstellt. Es wird erwartet, dass der Verbreitungsgrad zeitlich synchronisierter Netzwerkgeräte in Zukunft weiter zunimmt.

Der IEEE 802.1AS-Standard stellt ein solches Protokoll zur Zeitsynchronisation bereit. Ausgehend von einer sogenannten "besten Uhr" im Netzwerk, auch als Grandmaster oder Grandmaster Clock bezeichnet, wird eine Master-Slave-Uhrenhierarchie aufgebaut. Der Grandmaster stellt dabei die Zeitbasis für das Netzwerk bereit, auf die alle anderen Netzwerkgeräte des Netzwerks sich synchronisieren. Der Grandmaster wird mittels des sogenannten Best Master Clock Algorithmus (BMCA) bestimmt und innerhalb des Netzwerks bekanntgegeben. Dazu senden IEEE 802.1AS-fähige Netzwerkgeräte Announce-Nachrichten mit Informationen über ihre interne Uhr an unmittelbar angeschlossene weitere Netzwerkgeräte. Die Informationen über die internen Uhren geben Aufschluss auf die Genauigkeit der jeweiligen Uhr, deren Bezug oder Zeitreferenz sowie andere Eigenschaften, anhand derer die beste Uhr in dem Netzwerk bestimmt werden kann. Ein Empfänger einer solchen Announce-Nachricht vergleicht die empfangenen Informationen mit den Merkmalen seiner eigenen internen Uhr und evtl. bereits von einem anderen Port empfangenen Nachrichten mit Informationen zu Uhren anderer Netzwerkgeräte, und akzeptiert eine in einem anderen Netzwerkgerät befindliche Uhr, wenn diese bessere Uhrenparameter hat. Nach kurzer Zeit ist die beste Uhr in dem Netzwerk ermittelt, die dann der Grandmaster in dem Netzwerk wird. Ausgehend von dem Grandmaster werden Nachrichten zur Zeitsynchronisation über das Netzwerk verbreitet. Ein Netzwerkgerät das eine Nachricht zur Zeitsynchronisation empfängt leitet diese nicht einfach weiter, sondern korrigiert die Zeitinformation um die zuvor ermittelte Laufzeit auf der Verbindung, über die es Nachrichten zur Zeitsynchronisation von einem direkt verbundenen Netzwerkgerät empfängt, sowie um die interne Bearbeitungsdauer, bevor es die Nachricht zur Zeitsynchronisation mit der korrigierten Zeitinformation weitersendet.

Bei der Uhrenhierarchie gemäß IEEE 802.1AS und dem darin festgelegten "generalized precision time protocol" (gPTP) stellt immer nur ein einziges Netzwerkgerät die beste Uhr des Netzwerkes bereit. Dieses Netzwerkgerät steuert und regelt somit die gesamte Zeit des Fahrzeugs. Alle anderen Uhren in Netzwerkgeräten des Netzwerkes richten sich ausschließlich nach dieser einen Uhr. Einige Fahrzeughersteller synchronisieren sogar Netzwerke anderer Standards, bspw. CAN, über diesen Ethernet-Zeitmaster, so dass fast allen Netzwerkgeräten des Fahr-zeugs von dem den Grandmaster bereitstellenden Netzwerkgerät die Systemzeit mitgeteilt wird. Dadurch ist in dem Netzwerk bzw. dem Fahrzeug ein einzelnes Netzwerkgerät als Single Point of Failure festgelegt, dessen Ausfall oder Manipulation gravierende Auswirkungen auf die Betriebssicherheit des Fahrzeugs haben kann. So müssen bspw. in Fahrzeugen mit einem hohen Grad an Fahrerunterstützung durch entsprechende Systeme oder mit Systemen für das (Teil-)Autonome Fahren eine Vielzahl von innerhalb eines engen Zeitfensters erfassten Sensordaten gemeinsam verarbeitet werden, um entsprechende Ansteuersignale für Aktoren des Fahrzeugs abzuleiten. Auch für Dokumentationszwecke kann eine möglichst genaue Zeiterfassung von Sensordaten von großer Bedeutung sein, bspw. bei der Speicherung in Log-Dateien, durch deren Analyse Fehlfunktionen oder Fehlbedienungen rekonstruiert werden können. Letzteres ist insbesondere für Versicherungen und Strafverfolgungsbehörden von hohem Interesse. Daher ist eine sichere synchronisierte Bereitstellung der Zeitinformation unverzichtbar.

EP 2 759 174 A1 wird der Unterschied des Zählers des empfangenen Knotens und des empfangenden Knotens anhand eines Zeitstempels und Fehlerberechnungseinheit bestimmt. Der Fehlerwert berechnet sich aus dem Unterschied zwischen beiden Zählerwerten (absolut) oder durch den Unterschied zwischen der Drift der beiden Zählerwerten.

EP 2 490 357 A2 beschreibt ein Verfahren zum Synchronisieren einer lokalen Schätzung der globalen Netzwerkzeit eines Empfangsknotens in einem Netzwerk mit einer globalen Netzwerkzeit-Referenz von einem aus mindestens ersten und zweiten Sendeknoten im Netzwerk. Das Taktsynchronisationsverfahren ermöglicht einen freilaufenden Knoten in einem Avioniknetzwerk zu berechnen, um zu erkennen, ob ein Knoten synchronisiert wurden oder nicht. Bei dem Erkennungsfall wird vorgeschlagen, ein Sync Flag zu setzen.

US 2008 183 896 A1 beschreibt, wenn festgestellt wird, dass der Kommunikationsverlust zu lange andauert, was für das Netzwerk vorab definiert ist und eine Funktion der maximalen Driftrate der Uhr bei einem Server in Bezug auf die Uhr bei der Taktquelle dieses Servers ist, erklärt der empfangende Server seine Zeitparameter für ungültig

EP 2 191 300 A1 offenbart ein Sensornetzwerk zur Erfassung von Erdbebendaten Hierzu werden Uhren-Aktualisierungszyklen anhand der maximal tolerierten Zeitabweichung und der ermittelten (aktuellen) Frequenz-Drift bestimmt.

EP 2 382 829 A1 offenbart ein Verfahren zur Synchronisation einer Referenz-frequenz eines Basisstations-Sendeempfängers (BTS) mit der Referenzfrequenz einer Basisstationssteuerung (BSC) umfasst eine Folge von Schritten, wobei Synchronisationspakete übertragen und mit einem Zeitstempel des Sendens und einem Zeitstempel des Empfangens versehen werden. Eine Bewertung der Netzwerklieferung wird nach Abschluss eines

WO 2019/197233 A1 der Anmelderin beschreibt ein Verfahren zum Betreiben eines Ethernet-Bordnetzes eines Kraftfahrzeugs, bei welchem folgende Schritte durch geführt werden: Bestimmen einer Verbindungsverzögerung eines ersten Signals auf einem ersten Verbindungsweg zwischen einer ersten Steuereinheit des Ethernet-Bordnetzes und einer zweiten Steuereinheit des Ethernet-Bordnetzes ; Bestimmen einer Maximalgeschwindigkeit des ersten Verbindungswegs anhand der Verbindungsverzögerung; und Bestimmen eines Übertragungsmediums des ersten Verbindungswegs anhand der Verbindungsverzögerung und der Maximalgeschwindigkeit.

WO 2019/081463 A1 der Anmelderin offenbart ein Verfahren zur Bearbeitung einer Ethernet-Nachricht mit fehlerhaftem Zeitstempel, bei welchem folgende Schritte durchgeführt werden, Empfangen einer Ethernet-Nachricht mit einem Zeitstempel durch eine Steuereinheit; Bestimmen einer Zeitdifferenz zwischen einer globalen Zeit des Zeitstempels und einer lokalen Zeit einer Uhr der Steuereinheit; und Erkennen des Zeitstempels der Ethernet-Nachricht als fehlerhaft, wobei die globale Zeit des Zeitstempels durch die lokale Zeit der Uhr der Steuereinheit ersetzt wird, falls der Zeitstempel als fehlerhaft erkannt wird.

DE 10 2018 207684 A1 beschreibt ein Verfahren zum Bestimmen einer Synchronisationsgenauigkeit einer Zeitsynchronisation einer ersten Kommunikationseinheit, das Verfahren umfassend, Senden einer Zeitanfrage über einen Kommunikationskanal zu einem korrespondierenden Sendezeitpunkt von der ersten Kommunikationseinheit an eine zweite Kommunikationseinheit; Empfangen einer Zeitantwort, wobei die Zeitantwort eine Synchronisationszeitangabe der zweiten Kommunikationseinheit umfasst, zu einem korrespondierenden Empfangszeitpunkt an der ersten Kommunikationseinheit; und Bestimmen der Synchronisationsgenauigkeit basierend auf dem Sendezeitpunkt und dem Em pfangszeitpunkt.

Beobachtungszeitraums bewertet. Wenn sie hoch genug ist, wird ein Konfidenzniveau der empfangenen Synchronisationspakete ermittelt. Nur wenn das Konfidenzniveau über einem Schwellenwert liegt, wird eine Korrektur der Referenzfrequenz des Oszillators im Basis-stationssender-Empfänger vorgenommen.

Die Anzahl umgebungserfassender Sensorsysteme im Automobil steigt seit Jahren kontinuierlich. 2016 wurde, zusätzlich zu den vorhandenen Ultraschall- und Radarsensoren, auch einen Laserscanner in Serienproduktion verwenden. Trotz des seriennahen Einsatzes von verschiedenen Sensors-Systemen im Automobil, gibt es noch offen Fragen bezüglich der Fusion der gewonnenen Sensordaten. Mit Hilfe von Datenfusionen können Schwächen einzelner Sensorsysteme ausgegli-

chen und eine höhere Ausfallsicherheit (Robustheit) mittels Redundanz gewährleistet werden. Damit die Datenqualität für ADAS-Systeme auch bei Stau oder in städtischer Umgebung stabil bleibt, sind verschiedene Sensorsysteme, die den gleichen Sichtbereich überwachen, bei sicherheitskritischen Manövern, wie z.B. einer Notbremsung, erforderlich. Der Begriff Sensorfusion beschreibt das Ver-schmelzen von Daten unterschiedlicher Sensoren. Sensorfusion hat das Ziel, dass die Daten des Fusionsergebnisses in einem beliebigen Aspekt eine höhere Güte als die gewonnen Einzeldaten des jeweiligen Sensors aufweisen. Weiterhin wird in homogene und heterogene Sensornetzwerke unterschieden. In einem homogenen Sensornetzwerk arbeiten alle Sensoren mit demselben physikalischen Messprinzip und unterliegen somit denselben physikalischen Einschränkungen (wie z.B. Reichweite, Genauigkeit und Rauschempfindlichkeit). In heterogenen Sensornetzwerken werden dagegen unterschiedliche Messtechniken verwendet, sodass unter Umständen Schwächen eines Sensors, durch einen anderen wieder ausgeglichen werden können. Man unterscheidet hier die Sensorfusion in komplementäre, kompetitive, kooperative.

Aus dem Stand der Technik sind einige Ansätze zur Erkennung von Änderungen der Konfiguration oder Struktur eines Kommunikationsnetzwerks unter Nutzung der Zeitsynchronisation eines Netzwerks bekannt. Um den Mehrgewinn der Sensorfusion zu nutzen bedarf es einer Überwachung der Datenströme und deren Zuordnung zueinander. Eine unautorisierte Änderung der Konfiguration des Netzwerks kann zu Störungen führen, wobei die möglicherweise die Vorbereitung eines Angriffs umfasst, das Nachrichten zur Analyse abfängt und ggf. veränderte Nachrichten weitersendet. Dies kann dazu genutzt werden, den sicheren und ordnungsgemäßen Betrieb zu verhindern oder zumindest zu stören.

Heute gibt es noch keine Lösungen die Zeitstempel auf Gültigkeit validieren. Wie soll sich also eine Fusionseinheit verhalten, wenn Sie zwei Pakete fusionieren soll, die Zeitstempel aber nicht zusammenpassen. Dies bedeutet ja nicht unbedingt, dass die Daten alt und unbrauchbar sind, sondern dass ein Fehler im Zeit-stempel vorliegt. Außerdem ist zu erwähnen, dass eigentlich alle Pakete wichtig sind, und im Normalfall auf keines verzichtet werden kann. Zum Beispiel gibt es in einem ADAS-System nicht die Zeit verlorene Pakete neu anzufordern. Fahrsicherheitskritische Probleme, die durch einen Datenverlust verursacht werden, haben schwerwiegenden Auswirkungen und können zu einer falschen Ansteuerung von Aktoren im System führen.

Es ist daher eine Aufgabe der Erfindung, ein Verfahren bereitzustellen, das, wenn Zeitstempel falsch zugeordnet sind, dies zu erkennen, und durch diese Erkennung zugeordneten Daten in der Art zu überprüfen, ob die Daten zusammengehören, da sie zeitlich einen anderen Ursprung haben, um sie durch die Sensorfusion verlässlich zu nutzen.

Diese Aufgabe wird durch das in Anspruch 1 angegebene Verfahren und die im Anspruch 11 angegebene Steuereinheit, gelöst. Ausgestaltungen und Weiterentwicklungen sind in jeweiligen abhängigen Ansprüchen angegeben.

Mit anderen Worten ist die Aufgabe der Erfindung, die Zeitsynchronisation im Bordnetz sicher zu überwachen und abzusichern.

Die Uhrzeit kann durch Fehler, Temperatur oder auch Angriffe verfälsch worden sein. Gerade im Hinblick auf das automatisierte Fahren werden zeitgesteuerte Ausführungen von Aktionen immer wichtiger, wie z. B. Synchronisierung von Sensoren (Kamera, Lidar, Radar, etc.) und deren Datenströmen. Gerade bei diesen Funktionen ist eine Plausibilisierung notwendig, um zu prüfen ob eine Operation bspw. vom Fahrzeug übernommen werden kann, oder ob der Fahrer das Steuer besser noch weiterhin übernehmen sollte. Der Vorteil der Erfindung ergibt sich in der Angabe von Mechanismen und Verfahren, um den Zeitstempel für Sensornachrichten zu validieren und auf Gültigkeit zu prüfen.

Durch dieses Verfahren kann erkannt werden, ob die Zeitstempel bewusst gefälscht wurden und ein möglicher Angriff vorliegt. Des Weiteren erkennt das Verfahren, ob der Zeitstempel ungültig sein kann, obwohl noch keine Synchronisation vorliegt. Ebenfalls kann ein Zeitstempel fehlerhaft sein, wie durch einen sogenannten Bitdreher, der durch den beschriebenen Ansatz erkannt wird. Wenn die letzte erfolgreiche Synchronisation unbekannt ist, kann dies durch das angegebene Verfahren festgestellt werden. Durch das Verfahren wird die Security im Bereich von Ethernet erhöht.

Der Vorteil der Erfindung besteht darin, dass die Synchronisationsgenauigkeit und damit auch die Fusionsgenauigkeit von Sensordaten des Netzwerkes verbessert wird und zugesichert wird, da die Standards, wie Ethernet oder AUTOSAR heute noch keine Automotive-Hilfsmittel zur Verfügung stellen. Dass bedeutet, dass ein Fehlverhalten bzw. ein evtl. Fehler/Angriff hiermit durch die vorgestellte Überlegung erkannt werden kann. Durch die Implementierung derartiger Mechanismen und Protokolle kann auf etwaige Zusatzhardware als auch auf proprietäre Protokolle verzichtet werden. Dies bedeutet zudem, dass sich die Anzahl der Kommunikationstechnologien im Fahrzeug nicht weiter erhöhen muss oder keine zusätzliche Leitung gezogen/verschaltet werden muss.

Ein weiterer Vorteil ergibt sich darin, dass durch das Verfahren die Last auf einem Datenbus in einem Fahrzeug reduziert wird. Es muss weniger synchronisiert werden, was sich zudem auf die $\mu$C-Ressourcen, etwaige Fehler und positiv auf den Stromverbrauch auswirkt. Die wesentlichen Vorteile der Erfindung ergeben sich weiterhin daraus, dass Ethernet ohne weitere zusätzliche Hardwarekomponenten wie bspw. temperaturgesteuerten Quarzen oder Sicherheitsmodulen zeitgesteuerte Aktionen ausführen kann. Das erfindungsgemäße Ether-netz-Bordnetzwerk ist im Hinblick auf Kosten und Zuverlässigkeit verbessert.

Dieses Verfahren kann insbesondere in Form einer Software implementiert sein, die als Update oder Upgrade zu bestehender Software oder Firmware von Teil-nehmern am Netzwerk vertrieben werden kann und insofern eine eigenständige Lösung darstellt.

Durch die Erkennung ist es möglich, herauszufinden, ob beispielsweise ein Nachbarsteuergerät besonderer Gefahr ausgesetzt ist, wie zu hoher oder zu niedriger Temperatur, einem Fehler oder Angriff.

Durch die Erkennung von Modifikationen im Netzwerk wird eine weitere Methode geschaffen, um die Datensicherheit und funktionale Sicherheit im Bordnetz zu gewährleisten. Sollte beispielsweise ein modifiziertes Steuergerät eingesetzt werden, so ist dies augenscheinlich weder dem Fahrer noch der Werkstatt wirklich bewusst - das Ethernet-Bordnetzwerk und die Steuergeräte können auf Basis dieser beschriebenen Methoden Fehler identifizieren.

Die Erfindung und die daraus resultierende Lösung sind gerade für den Bereich Automotive interessant, da das Thema Zuverlässigkeit und Safety über Ethernet eine große Bedeutung im Automobil hat und zunehmend bekommen wird. In den nächsten Jahren werden die Sensoren (Kamera und Radar) auch unkomprimierte Daten über Ethernet übertragen. Mit einer solchen Datenrate sind weitere Techniken notwendig, um das Ethernet-System ausfallsicherer und performanter zu machen. Dies Verfahren trägt hierzu bei, um diese Anwendungen zu ermöglichen.

Ein bestehendes Problem heute und mit jedem neuen System ist die Abhängigkeit zu den Kommunikationsschnittstellen und deren Unterstützung. Mit der hier beschriebenen Erfindung kann viel plattformunabhängiger entwickelt werden. Durch die Umsetzung der Erfindung kann die Implementierung länger einsetzt und die notwendige Wartung reduziert werden.

Durch eine genauere Synchronisation können bspw. echtzeitkritischere Aktionen (Sensorfusion) sicherer und verlässlicher ausgeführt werden. Die Güte der Sensordatenfusion wird erhöht, was letztendlich zu einem besseren Umfeldmodell und besseren Trajektorien führt.

Gerade im Bereich ADAS ist es hingegen in der Regel nicht wirtschaftlich, allen mit dem Netzwerk verbundenen Teilnehmern eine für lückenlos verschlüsselte Kommunikation ausreichende Hardwareausstattung auszustatten. Das beschriebene Verfahren setzt deutlich geringere Hardwareressourcen voraus und kann mit vorhandenen Implementierungen umgesetzt werden und steigert somit das Sicherheitsniveau deutlich, ohne dass dies zwangsläufig mit höheren Her-stellungskosten für das Netzwerk oder daran angeschlossene Geräte gekoppelt wäre.

Mit der Nutzung des neu eingeführten Ethernet-Protokolls im Automobil sind Mechanismen notwendig, die sich einfache Techniken und gegebene Eigenschaften von Technologien zu Nutze machen, um auf teure Implementierungen und weitere zusätzliche Hardware verzichten zu können. Durch frühzeitigere Erkennung von Angriffen und Fehlverhalten mittels der frühen Analyse der Kommunikationspfade lassen sich Lücken und Fehler vor der Auslieferung des Fahrzeugs erkennen. Das erfindungsgemäße Netzwerksystem ist im Hinblick auf Kosten und Zuverlässigkeit verbessert. Die Testbarkeit des Systems wird durch die Erfindung klarer definiert und dadurch können Testkosten gespart werden. Zudem bietet die Erfindung eine transparente Sicherheitsfunktionalität.

Das Verfahren kann in einem Steuergerät implementiert und ein Bordnetzwerk, bestehend aus verschieden Steuergeräten, eingesetzt werden, welches einen verbesserten Schutz der Zeitsynchronisation gewährleistet.

Diese Aufgabe wird durch das in Anspruch 1 angegebene Verfahren und die im Anspruch 11 angegebene Steuereinheit gelöst. Ausgestaltungen und Weiterentwicklungen sind in jeweiligen abhängigen Ansprüchen angegeben.

In einer Ausgestaltung des Verfahrens zur Prüfung der Gültigkeit von Sensordaten eines Ethernet-Bordnetzes werden in einem Kraftfahrzeug die folgenden Schritte durchgeführt werden:

a) Bestimmen einer Laufzeit (9) eines ersten Signals (10) auf einem ersten Verbindungsweg (6) zwischen einer ersten Steuereinheit (3) des Ethernet-Bordnetzes (2) und einer zweiten Steuereinheit (4) des Ethernet-Bordnetzes (2);

b) Bestimmen einer Maximalgeschwindigkeit (11) des ersten Verbindungsweges (6) anhand der Laufzeit (9); und

c) Bestimmen einer Art eines Übertragungsmediums (12) des ersten Verbindungsweges (6) anhand der Maximalgeschwindigkeit (11).

Zusätzlich erfolgt die Identifikation mindestens einer ersten Steuereinheit (3) des Ethernet-Bordnetzes, die Synchronisation von mindestens einer ersten Steuereinheit des Ethernet-Bordnetzes; die Ermittlung des Synchronisationsintervalls; die Ermittlung eines Drifts eines Zeitgebers der ersten Steuereinheit; die Ermittlung eines Zeitstempels der ersten Steuereinheit; das Auslesen eines Zeitstempels oder Abfrage der Uhrzeit der ersten Steuereinheit; der Vergleich des Zeitstempels mit einer Referenzuhr des Ethernet-Bordnetzes; die Durchführung einer Laufzeitmessungen; die Ermittlung der Geschwindigkeit des dazugehörigen Taktgebers; die Ermittlung der Zeitdifferenz des Synchronisationsintervalls und die Ermittlung der letzten Synchronisation.

Zusätzlich kann hierbei wird durch die Bestimmung der Laufzeit eines ersten Signals und der Bestimmung der Maximalgeschwindigkeit des ersten Verbindungsweges und der Bestimmung der Art eines Übertragungsmediums des ersten Verbindungswegs eine Entropiequelle gebildet, aus der mindestens ein dynamischer Schlüssel für den Verbindungsweg ermittelt wird, der zur Verschlüsselung einer Zeitsynchronisationsnachrichten für den Verbindungsweg 6 eingesetzt wird.

In einer weiteren Ausgestaltung des Verfahrens erfolgt die Ermittlung des Drifts des Zeitgebers mittels des Protokolls IEEE 802.1AS.

Eine weitere Ausgestaltung der Erfindung zeichnet sich dadurch aus, dass der Vergleich des Zeitstempels mit einer Referenzuhr des Ethernet-Bordnetzes (3) eine Differenzbildung in der Form TAbweichung = TRferenz-Tverdächtig erfolgt.

Eine weitere Ausgestaltung der Erfindung zeichnet sich dadurch aus, dass die Geschwindigkeit des Taktgebers mittels des PTP NRR Verfahren (Neighbor Rate Ratio) ermittelt wird.

Eine weitere Ausgestaltung der Erfindung zeichnet sich dadurch aus, dass die Art des Übertragungsmediums und die Ermittlung des Synchronisationsintervalls, die Ermittlung eines Drifts eines Zeitgebers der ersten Steuereinheit, die Ermittlung eines Zeitstempels der ersten Steuereinheit, die Ermittlung der Geschwindigkeit des dazugehörigen Taktgebers, die Ermittlung der Zeitdifferenz des Synchronisationsintervalls, die Ermittlung der letzten Synchronisation einem Programm im Ethernet-Bordnetz mitgeteilt wird und eine Verbindungswegwahl des Programms abhängig von der Art des Übertragungsmediums angepasst wird.

Eine weitere Ausgestaltung der Erfindung zeichnet sich dadurch aus, dass die Art des Übertragungsmediums als optisch, Kupfer oder drahtlos bestimmt wird.

Eine weitere Ausgestaltung der Erfindung zeichnet sich dadurch aus, dass dem ersten Verbindungsweg (6) anhand der Art des Übertragungsmediums (12) ein Übertragungssicherheitswert (15), welcher eine Verlustwahrscheinlichkeit von über den ersten Verbindungsweg (6) übertragenen Daten beschreibt, zugewiesen wird.

Eine weitere Ausgestaltung der Erfindung zeichnet sich dadurch aus, dass Laufzeiten von einer Mehrzahl von Signalen auf dem ersten Verbindungsweg bestimmt werden und die schnellste Laufzeit der Mehrzahl der Signale ausgewählt wird, wobei die Maximalgeschwindigkeit des ersten Verbindungswegs anhand der schnellsten Laufzeit bestimmt wird.

Eine weitere Ausgestaltung der Erfindung zeichnet sich dadurch aus, dass eine Laufzeit eines zweiten Signals auf einem vom ersten Verbindungsweg unter-schiedlichen zweiten Verbindungsweg zwischen der ersten Steuereinheit und der zweiten Steuereinheit bestimmt wird, und eine Maximalgeschwindigkeit des zweiten Verbindungswegs bestimmt wird, wobei eine Art des Übertragungsmediums (19) des zweiten Verbindungswegs (7) anhand der Maximalgeschwindigkeit (11) des zweiten Verbindungswegs (7) bestimmt wird.

Eine weitere Ausgestaltung der Erfindung zeichnet sich dadurch aus, dass das Verfahren nach einem Wechsel der ersten Steuereinheit (3) von einem Normalbetriebsmodus in einen Energiesparmodus und/oder vom Energiesparmodus in den Normalbetriebsmodus ausgeführt wird.

Eine weitere Ausgestaltung der Erfindung zeichnet sich dadurch aus, dass die Laufzeit des ersten Signals mit der ersten Steuereinheit bestimmt wird und eine Laufzeit eines dritten Signals auf einem nur indirekt mit der ersten Steuereinheit verbundenen dritten Verbindungsweg zwischen der zweiten Steuereinheit (4) und einer dritten Steuereinheit des Ethernet-Bordnetzes mit der dritten Steuereinheit (5) bestimmt wird, wobei die Bestimmung der Laufzeit des dritten Signals durch eine von der ersten Steuereinheit an die dritte Steuereinheit gesendete Dienstnachricht ausgelöst wird.

Die Ausgestaltung der Steuereinheit für ein Ethernet-Bordnetz, welche als erste Steuereinheit ausgebildet ist, ermöglicht ein Signal an eine zweite Steuereinheit des Ethernet-Bordnetzes zu senden und das Signal von der zweiten Steuereinheit zu empfangen; eine Laufzeit des Signals auf einem Verbindungsweg zur zweiten Steuereinheit zu bestimmen; eine Maximalgeschwindigkeit des Verbindungswegs anhand der Laufzeit zu bestimmen und eine Art eines Übertragungsmediums des Verbindungswegs anhand der Maximalgeschwindigkeit zu bestimmen, wobei die Steuereinheit mindestens einen Mikroprozessor, einen flüchtigen Speicher und nichtflüchtigen Speicher, mindestens zwei Kommunikationsschnittstellen, einen synchronisierbaren Zeitgeber, der nichtflüchtige Speicher Programminstruktionen enthält, die, wenn sie von dem Mikroprozessor ausgeführt werden, zumindest eine Ausgestaltung des Verfahrens nach Anspruch 1 bis 10 implementierbar und ausführbar ist.

Eine weitere Ausgestaltung des Ethernet-Bordnetzes für ein Kraftfahrzeug zeichnet sich dadurch aus, dass die erste Steuereinheit mit einer zweiten Steuereinheit zumindest über einen Verbindungsweg miteinander verbunden ist, und die erste Steuereinheit gemäß Anspruch 11 ausgebildet ist.

Eine weitere Ausgestaltung des Ethernet-Bordnetz zeichnet sich dadurch aus, dass das Ethernet-Bordnetz eine dritte Steuereinheit aufweist, welche nur indirekt mit der ersten Steuereinheit verbunden ist und über einen dritten Verbindungsweg direkt mit der zweiten Steuereinheit verbunden ist, wobei die dritte Steuereinheit dazu ausgebildet ist, eine Laufzeit eines dritten Signals auf dem dritten Verbindungsweg zu bestimmen, wobei die erste Steuereinheit dazu ausgebildet ist, die Bestimmung der Laufzeit des dritten Signals durch eine Dienstnachricht an die dritte Steuereinheit auszulösen.

Eine Ausgestaltung wird durch ein Computerprogrammprodukt wiedergegeben. Hierbei umfasst das Computerprogrammprodukt Befehle, die bei der Ausführung des Programms durch einen Computer diesen veranlassen, das Verfahren nach einem oder mehreren der Ansprüche 1 - 10 auszuführen.

Eine Ausgestaltung erfolgt auf einem computerlesbaren Medium, auf dem das Computerprogrammprodukt nach Anspruch 12 gespeichert ist.

Ein erfindungsgemäßes Computerprogrammprodukt enthält Befehle, die bei der Ausführung durch einen Computer diesen dazu veranlassen, eine oder mehrere Ausgestaltungen und Weiterentwicklungen des vorstehend beschriebenen Ver-fahrens ausführen.

Das Computerprogrammprodukt kann auf einem computerlesbaren Medium oder Datenträger gespeichert sein. Der Datenträger kann physisch verkörpert sein, bspw. als Festplatte, CD, DVD, Flash-Speicher oder dergleichen, der Datenträger bzw. das Medium kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

Eine zumindest erfindungsgemäße Steuereinheit umfasst neben einem Mikro-prozessor und nichtflüchtigem und flüchtigem Speicher sowie einem Zeitge-ber mindestens eine physikalische Kommunikations-schnittstelle. Die Komponenten der Steuereinheit sind mittels einer oder mehreren Datenleitungen oder -bussen kommunikativ miteinander verbunden. Der Speicher der Steuereinheit enthält Computerprogramminstruktionen, die bei Ausführung durch den Mikroprozessor das Netzwerkgerät dazu einrichten, eine oder mehrere Ausgestaltungen des vor-stehend beschriebenen Verfahrens zu implementieren.

Das erfindungsgemäße Verfahren kann mit existierenden Netzwerkgeräten um-gesetzt werden, wobei ggf. nur Anpassungen in der Software bzw. der für den Empfang und die Verarbeitung von Nachrichten zur Zeitsynchronisation genutzten Zustandsmaschinen erforderlich sind, um nur die von der bei der Initialisierung ermittelten Grandmaster Clock kommenden Nachrichten zur Zeitsynchronisation für die Synchronisierung der Uhren zu nutzen, die zusätzlichen Nachrichten zur Zeitsynchronisation aber trotzdem weiterzuleiten und nicht einfach zu löschen. Dadurch fallen, wenn überhaupt, für die Umsetzung nur geringe zusätzliche Kosten an. Auch bestehende Systeme können durch entsprechend geänderte Software dazu eingerichtet werden, das Verfahren umzusetzen. Ein weiterer Vorteil des erfindungsgemäßen Verfahrens liegt darin, dass die jeweils zugrundeliegende Hardwareplattform ohne Bedeutung ist, solange diese eine Synchronisierung nach dem IEEE 802.1AS-Standard unterstützen.

Kurze Beschreibung der Zeichnungen

Im Folgenden wird die Erfindung mit Bezug auf die Zeichnung exemplarisch erläutert. In der Zeichnung zeigt:

Fig. 1a   eine schematische Draufsicht auf ein Kraft-fahrzeug mit einem Ausführungsbeispiel ei-nes erfindungsgemäßen Ethernet-Bordnet-zes;

Fig. 1b   eine schematische Darstellung des Ethernet-Bordnetzes mit einer ersten Steuereinheit, einer zweiten Steuereinheit und einer dritten Steuereinheit, welche mit einem ersten Ver-bindungsweg, einem zweiten Verbindungs-weg und einem dritten Verbindungsweg verbunden sind;

Fig. 2   einen vollständigen Ablauf des Verfahrens und die Bestimmung der aktuellen Uhrzeit des zu untersuchenden Knotens und dessen Taktgebereigenschaften;

Fig. 3   ein Ablaufdiagramm zur Verschlüsselung der Zeitsynchronisationsnachrichten zur Bestimmung einer Art eines Übertragungs-mediums des jeweiligen Verbindungswegs;

Fig. 4   eine Darstellung eines Sägezahnmodells ei-nes Frequenzdrifts bei erfolgreicher Zeitsyn-chronisation;

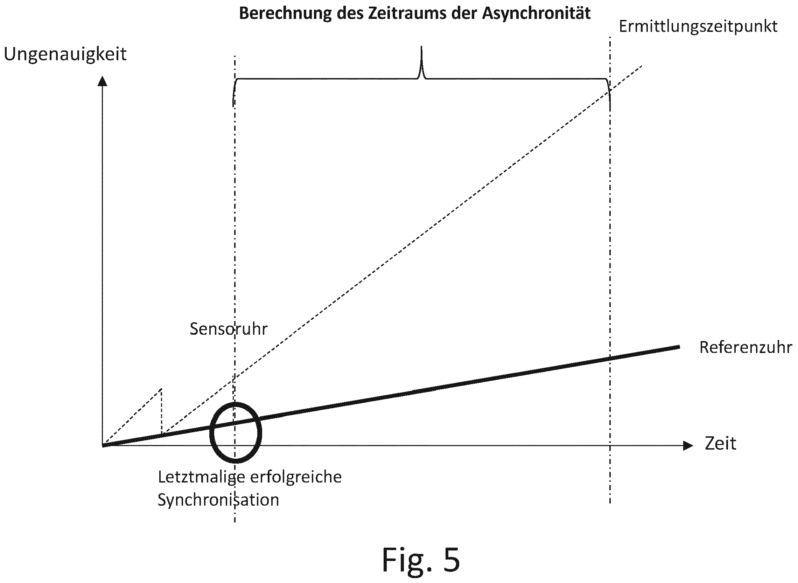

Fig. 5   eine graphische Darstellung der Berechnung des Zeitraums der Asynchronität;

Fig. 6a   ein Ablauf der Bestimmung eines Offsets eines Sensors bei einer Sensorfusion;

Fig. 6b   die Ermittlung des Zeitpunktes der letzten erfolgreichen Synchronisation;

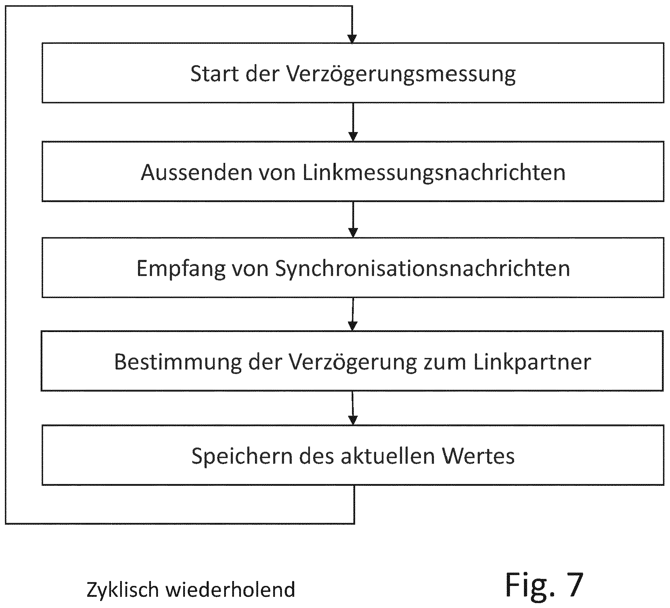

Fig. 7   ein Ablaufdiagramm zur Bestimmung der individuellen Quarzfrequenz;

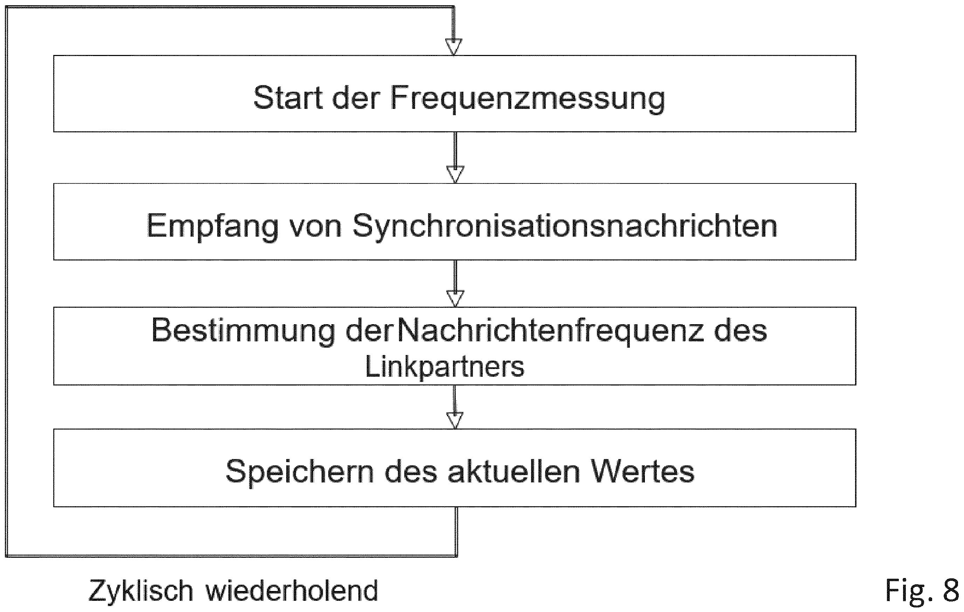

Fig. 8   ein Ablaufdiagramm zur Berechnung des Schlüssels und zur Versendung der Nachrichten;

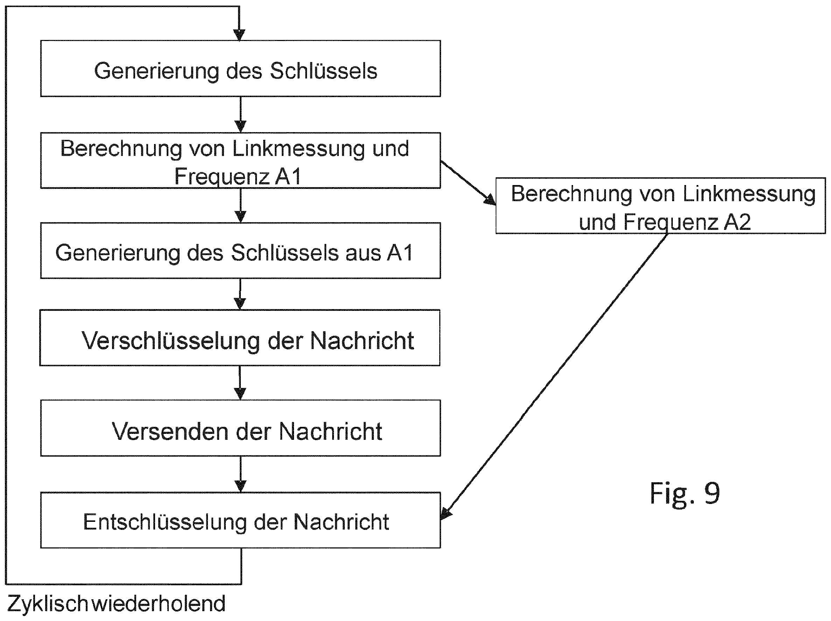

Fig. 9   ein Ablaufdiagramm zur zeitlichen Verwendung eines Schlüssels;

Fig. 10   ein Ablaufdiagramm zur Anpassung eines Programms im Ethernet-Bordnetz;

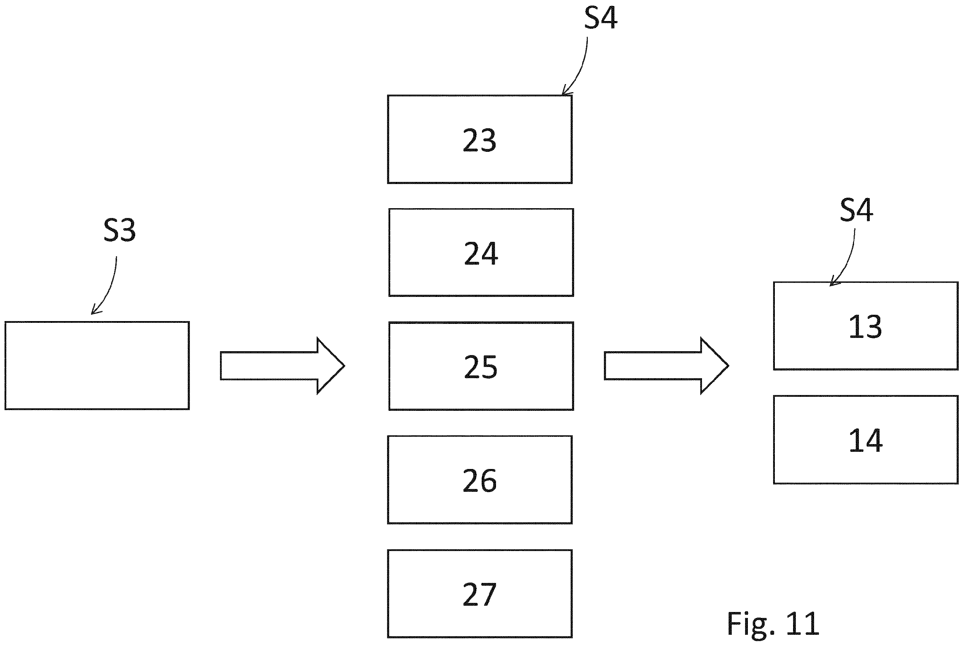

Fig. 11   ein Ablaufdiagramm zur Anpassung eines Programms im Ethernet-Bordnetz;

Fig. 12   ein Ablaufdiagramm zur Bestimmung und Speicherung einer Laufzeit eines Signals;

Fig. 13   ein Ablaufdiagramm zur beispielhaften Anpassung eines Programms im Ethernet-Bordnetz;

Fig. 14   ein Ablaufdiagramm zur beispielhaften Anpassung eines Programms im Ethernet-Bordnetz;

Fig. 15　Ablaufdiagramm zur Bewertung der Verwendung von empfangenen Daten auf Basis des letzten erfolgreichen Synchronisationszeitpunktes;

Fig. 16　Aufbau einer Steuereinheit;

Fig. 17　Verschlüsselte Links mit erzeugtem dynamischen Schlüssel aus der Kommunikation der Steuereinheiten;

Fig. 18　eine Darstellung des Anwendungsfalles einer Datenfusion;

Fig. 19　eine Darstellung des Anwendungsfalles einer Datenfusion mit einem Datenrekorder;

Fig. 20　eine Darstellung einer Zuordnung von richtigen Daten bei einer Datenfusion;

Fig. 21　eine Darstellung einer fehlerhaften Zuordnung von Daten bei einer Datenfusion;

Fig. 22　ein Ablauf zur rückwirkenden Löschung von Daten, wenn der Synchronisationszeitpunkt oberhalb des Grenzwertes liegt.

Gleiche oder ähnliche Elemente können in den Figuren mit denselben Bezugszeichen referenziert sein.

Beschreibung von Ausführungsbeispielen

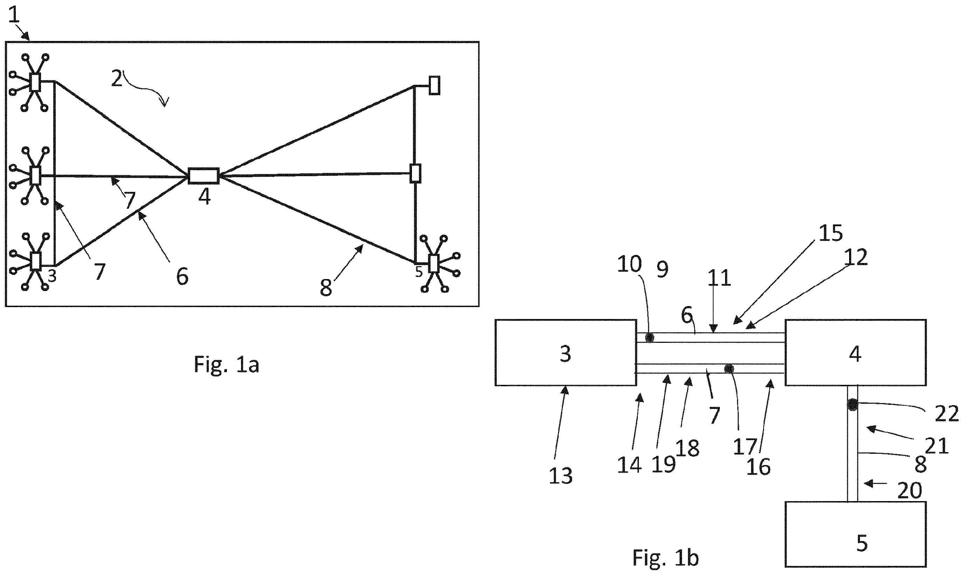

Fig. 1a zeigt ein Kraftfahrzeug 1 in Draufsicht. Das Kraftfahrzeug 1 weist ein Ethernet-Bordnetz 2 auf. Das Ethernet-Bordnetz 2 wiederum weist gemäß dem Ausführungsbeispiel eine Mehrzahl von Steuereinheiten 3, 4, 5, welche auch als Steuereinrichtungen oder Steuergeräte bezeichnet werden können. Die Steuer-einheiten sind dabei mit Verbindungswegen untereinander verbunden. Aufgrund der vorhandenen Topologie des Ethernet-Bordnetzes 2 im Ausführungsbeispiel gibt es mehrere parallele Kommunikationswege zwischen den Steuereinheiten. Die Verbindungswege können beispielsweise aus unterschiedlichen Medientypen bzw. Materialien ausgebildet sein.

Mit Zunahme der Anzahl an Ethernet-Varianten wird beispielsweise auch die dynamische Änderung der Verbindungsgeschwindigkeit Einsatz finden. Das bedeutet beispielsweise, dass zur Laufzeit die Geschwindigkeit geändert werden kann. Beispielsweise kann ein 10 Gbit/s Verbindungsweg auf 100 Mbit/s geändert werden, damit Energie gespart wird. Da es sich dabei um eine dynamische Funktion handelt, kann es sein, dass das Bordnetz nach Auslieferung oder nach Erstmontage im Kraftfahrzeug anders ausgebildet ist als etwa nach einer Softwareaktualisierung oder in einer Fehlsituation.

Das Ethernet-Bordnetz 2 weist eine mindestens eine erste Steuereinheit 3, eine zweite Steuereinheit 4 und zusätzlich eine dritte Steuereinheit 5 auf. Die erste Steuereinheit 3 ist durch einen ersten Verbindungsweg 6 mit der zweiten Steuereinheit 4 verbunden. Weiterhin ist die erste Steuereinheit 3 gemäß dem Ausführungsbeispiel auch durch einen zweiten Verbindungsweg 7 mit der zweiten Steuereinheit 4 verbunden.

Die erste Steuereinheit 3, die zweite Steuereinheit 4 und/oder die dritte Steuer-einheit 5 können beispielsweise als Steuergerät oder Netzwerkweiche ausgebildet sein. Die zweite Steuereinheit 4 und die dritte Steuereinheit 5 sind durch einen dritten Verbindungsweg 8 miteinander verbunden.

Gemäß dem Ausführungsbeispiel von Fig. 1a sind die erste Steuereinheit 3 und die zweite Steuereinheit 4 direkt über den ersten Verbindungsweg 6 miteinander verbunden, während die erste Steuereinheit 3 und die zweite Steuereinheit 4 mit dem zweiten Verbindungsweg 7 nur indirekt verbunden sind, da der zweite Verbindungsweg 7 durch eine weitere Steuereinheit in zwei Teile geteilt ist. Gemäß einem anderen Ausführungsbeispiel kann der zweite Verbindungsweg 7 die erste Steuereinheit 3 und die zweite Steuereinheit 4 aber auch direkt miteinander verbinden.

Generell gesprochen eignet sich das Verfahren, Fehler in der Synchronisierung zu entdecken.

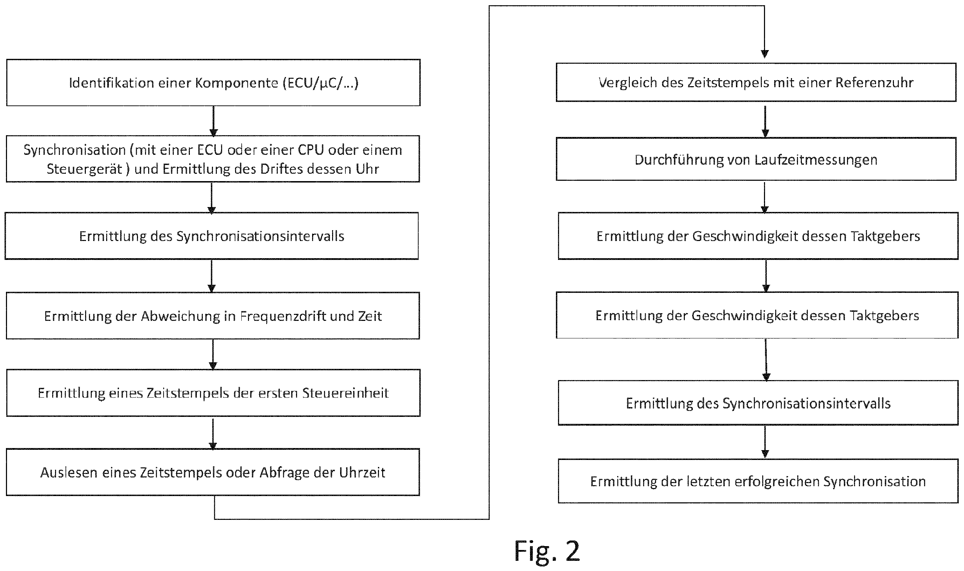

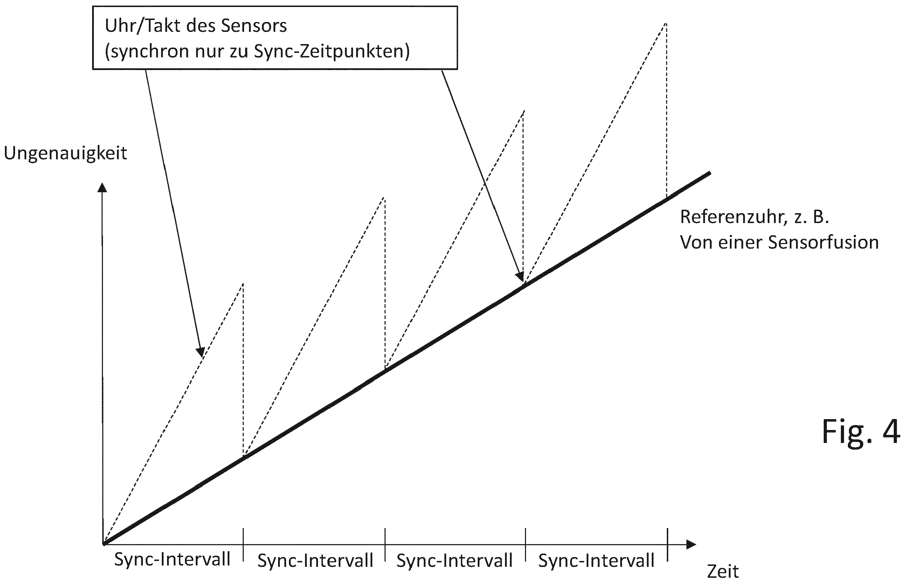

Wie in Fig. 2 dargestellt wird es ermöglicht, die Zeitdauer der Unsynchronität respektive wann der Zeitpunkt und wann das letzte Mal korrekt synchronisiert wurde, zu berechnen bzw. festzustellen. Auf Basis einer bestehenden Synchronisierung schlägt das Verfahren vor, die Ungenauigkeit der Uhren im Netzwerk z. B. des "meiner" Nachbar-ECU oder der "Nachbar" CPU, innerhalb derselben ECU liegen kann, zu ermitteln. Auf Basis dieser ermittelten Daten kann mittels eines Zeitstempels dieser Komponente, in Verbindung mit "meiner" eigenen Uhr oder der des Grandmasters und des Synchronisierungsintervalles berechnet werden, wieviel Zeit seit der letzten Synchronisierug vergangen ist. Es kann damit ermittelt werden, wann die letzte erfolgreiche Synchronisierung stattgefunden hat. Zu einem Zeitpunkt, der auch Ermittlungszeitpunkt genannt wird, wird ein Zeit-stempel einer ECU eines Steuergerätes aufgenommen, von dem man wissen möchte, ob dieser noch synchron ist. Auf Basis einer Reihe von Parametern wird dann ermittelt, wieviel Synchronisationsintervalle respektive seit welchem Zeitpunkt diese Komponente nicht mehr erfolgreich synchronisiert wurde, wie dies exemplarisch in Fig. 4 visualisiert wird.

Somit bestimmt das Verfahren, wann die letzte erfolgreiche Synchronisation eines Knotens stattgefunden hat und damit auch wie lange der Knoten nicht mehr synchronisiert wurde. Dies ist die Basis, um zu entscheiden, ob die Sensordaten vertrauenswürdig sind und damit benutzbar sind oder nicht.

Fig. 4 veranschaulicht generell die Synchronisation einer Nachrichten-basierten Zeitsynchronisation. Nach dem Eintreffen von Synchronisationsnachrichten wird die interne Uhr oder der Offset angepasst. Danach läuft die Uhr wieder mit der eigenen Charakteristik bis zur nächsten Synchronisation weiter.

Wie aus Fig. 2 zu entnehmen beginnt das Verfahren indem der Knoten, respektive ein μC oder Switch oder die gesamte ECU oder die Steuereinheit 3, 4, 5 zu dessen Zeit befragt wird oder mittels eines Zeitstempels ausgelesen wird. Dieser Wert wird gespeichert. Das Verfahren bestimmt dann, mittels des 802.1AS Protokolls (Pdelay-Abfrage) den Frequenzdrift des Zeitgebers. Damit wird durch zyklische Nachrichten, welche eigentlich der Laufzeitmessung dienen und sowieso übertragen werden, berechnet mit welcher Geschwindigkeit der Taktgeber dieser ECU/μC oder gesamte ECU oder eine Steuereinheit 3, 4, 5 arbeitet.

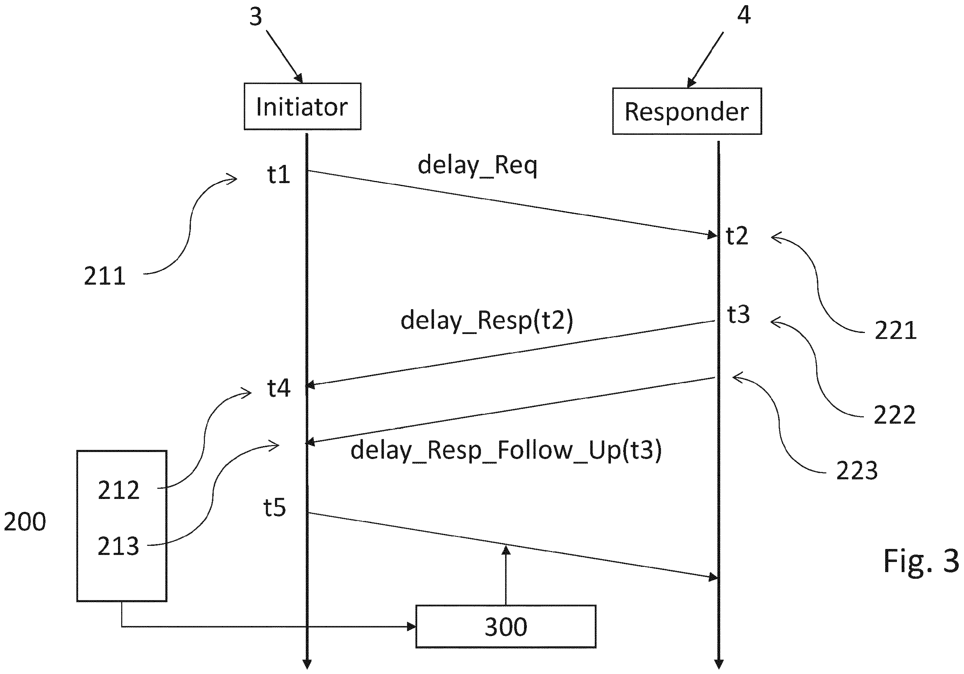

Zur Laufzeitmessung wird der Ablauf nach dem Ablauf aus Fig. 3 verwendet. Ein Port, der Initiator, startet die Messung, indem er eine Delay_Request-Nachricht an den mit ihm verbundenen Port, den Responder sendet und einen Ausgangszeitstempel t1 generiert. Dieser Ausgangszeitstempel bezeichnet einen Hardware-Zeitstempel, der so spät wie möglich beim Verlassen des Ethernet-Transceivers geschrieben wird. Der Responder generiert beim Eintreffen dieses Paketes einen Zeitstempel t2. Als Antwort sendet der Responder eine Delay_Response-Nachricht. In dieser Nachricht überträgt er den Empfangs-Zeitstempel t2 der Delay_Request-Nachricht. Verlässt diese Nachricht den Responder, so erzeugt dieser wiederum einen Zeitstempel t3, welcher in einer unmittelbar darauffolgenden Delay_Response_Follow-Up-Nachricht versendet wird. Beim Empfang der Delay_Response-Nachricht beim Initiator generiert dieser einen Zeitstempel t4. Der Initiator kann aus den vier Zeitstempeln t1 bis t4 die durchschnittliche Laufzeit der zurückgelegten Strecken errechnen.

PTP definiert eine Master-/Slave-Uhrenhierarchie mit einer besten Uhr innerhalb eines Netzwerkes. Von dieser Uhr, dem Grandmaster, leitet sich die Zeitbasis der in diesem Netzwerk befindlichen Knoten ab. Der Best Master Clock Algorithmus (BMCA) dient zur Bestimmung dieses Uhrentyps und der Bekanntmachung dieser Information im Netzwerk. IEEE 802.1AS-fähige Systeme senden zyklisch Announce-Nachrichten zu ihren Nachbarknoten mit Informationen zur besten Uhr der Wolke. Der Empfänger einer solchen Nachricht vergleicht diese Informationen mit den Merkmalen seiner Uhr und den evtl. bereits von einem anderen Port empfangenen Nachrichten. Auf Basis dieser Nachrichten wird ein Zeitsychronisationsspannbaum aufgestellt. Jedem Port wird in diesem Zuge einer von vier Port-Zuständen zugewiesen. Den Zustand Master Port bekommt der Port, der einen kürzeren Weg zum Grandmaster hat als sein Linkpartner. Der Zustand Slave wird dann zugeordnet, wenn an diesem Knoten noch kein anderer Port diesen Zustand besitzt. Disabled wählt derjenige Port, welcher dass PTP-Protokoll nicht vollständig unterstützen kann. Der Zustand passiv wird gewählt, wenn keiner der anderen drei Zustände zutrifft.

Der Austausch der Zeitinformation wird schließlich durch den Sync_Follow_Up-Mechanismus durchgeführt. Die Master Ports senden zyklisch Sync- und Follow_Up-Nachrichten an den benachbarten Linkpartner. Wenn die Sync-Nachricht den Master Port verlässt, wird ein Zeitstempel generiert, welcher unmittelbar in einer darauffolgenden Follow_Up-Nachricht übertragen wird. Dieser Zeitstempel entspricht der aktuellen Uhrzeit des Grandmasters zum Sendezeitpunkt der Sync-Nachricht. Die vom Grandmaster ausgehenden Nachrichten werden nicht weitergeleitet, sondern in jedem Knoten, auch den Switchen, neu erstellt.

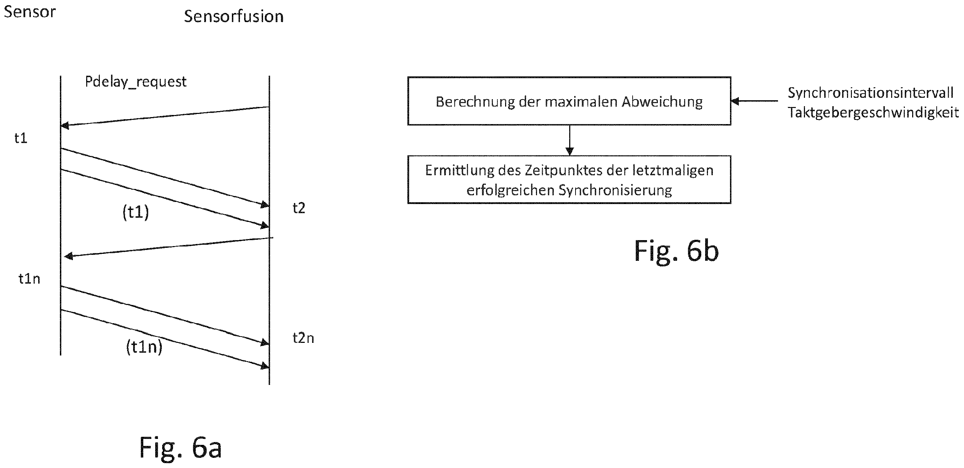

Wie in Fig. 6a angegeben kann durch das PTP NRR Verfahren (Neighbor Rate Ratio) die Geschwindigkeit des Taktgebers ermittelt bzw. berechnet werden. Dabei werden zyklische PDelay Nachrichten verwendet, um die Geschwindigkeit (Offset) des Taktgebers zur Referenzuhr auszurechnen. Die ausgelesene oder abgefragte Uhrzeit (Tverdächtig) wird der aktuellen Systemzeit (TReferenz) zugeordnet, somit der Zeit, der vertraut wird, entweder dem Grandmaster oder der Zeit, für die die Daten wichtig sind. Ist die zu untersuchende Komponente ein Sensor, dann könnte als Referenz die Sensorfusionszeit herangezogen werden verglichen. Das bedeutet das erstmal die Differenz der beiden Uhrzeiten ermittelt wird.

$$TAbweichung = TRferenz - Tverdächtig$$

Mithilfe der Synchronisationsfrequenz kann zunächst berechnet werden, wie groß TAbweichung maximal sein dürfte: Bei Ethernet ist die Schnittstelle zwischen PHY (Tranceiver) und MAC die maßgebende Schnittstelle zur Aufnahme der Zeitinformationen. Diese Schnittstelle (xMII) ist mit einer nominalen Frequenz f von 25 MHz getaktet. Quarze für Automotive-Ethernet-AVB/TSN taugliche Implementierungen dürfen eine maximale Ungenauigkeit fo von ±100 ppm nicht überschreiten. Somit verursacht der schlechtmöglichste Quarz in Verbindung mit der Schnittstelle eine Abweichung in der Frequenz von 5 kHz zur nominellen Frequenz f nach Formel:

$$df = (f * fo)/10^6$$

Die Änderung in der Periode zwischen der maximalen (25002500 Hz) und der minimalen Frequenz (24997500 Hz) beträgt 8 ps bei einer Periodendauer von 40 ns. Das bedeutet, dass zwei Quarze (und damit zwei ECUS) in 40 ns eine maximale zeitliche Differenz von 8 ps bei +25C zueinander aufweisen können. Exakt 3125000 Perioden a 40 ns sind im Standard-Synchronisationsintervall von 125 ms möglich, was einer maximalen Abweichung von 25 μs entspricht.

Das Synchronisationsintervall kann laut Spezifikation von IEEE802.1AS zwischen 31.25 ms und 32 Sekunden liegen. Bei kleinstem Intervall bedeutet dies eine Worst Case Abweichung von 6.25μs und beim

größten Intervall von 6,4 ms.

Schematisch ist in Fig. 6b angegeben, wie mittels der vorangegangenen Formel, durch die Ermittlung der Geschwindigkeit des Taktgebers und der Kenntnis des Synchronisationsintervall TAbweichung durch das Verfahren, wann die letzte Synchronisation stattgefunden hat, berechnet werden.

In der in Fig. 1b abgebildetem Ausführungsbeispiel des Ethernet-Bordnetzes 2 weist die erste Steuereinheit 3, die zweite Steuereinheit 4 und die dritte Steuereinheit 5 auf. Weiterhin weist das Ethernet-Bordnetz 2 auch den ersten Verbindungsweg 6, den zweiten Verbindungsweg 7 und den dritten Verbindungsweg 8 auf. Gemäß dem Ausführungsbeispiel wird eine Laufzeit 9 eines ersten Signals 10 auf dem ersten Verbindungsweg 6 bestimmt. Durch die Laufzeit 9 wird beschrieben, wie lange das erste Signal 10 über den ersten Verbindungsweg 6 von der ersten Steuereinheit 3 zur zweiten Steuereinheit 4 oder umgekehrt unterwegs ist. Anhand der Laufzeit 9 des ersten Signals 10 wird eine Maximalgeschwindigkeit 11 des ersten Verbindungswegs 6 bestimmt. Die Maximalgeschwindigkeit 11 des ersten Verbindungswegs 6 variiert dabei beispielsweise je nach Länge des Kabels, der Geschwindigkeit der Übertragung und/oder des Medientyps bzw. der Art des Übertragungsmediums. Anhand der Maximalgeschwindigkeit 11 wird eine Art eines Übertragungsmediums 12 des ersten Verbindungswegs 6 bestimmt.

Gemäß diesem Ausführungsbeispiel wird die Art des Übertragungsmediums 12 als optisch, Kupfer oder drahtlos bestimmt. Bei optisch ist der erste Verbindungsweg 6 beispielsweise als Glasfaserverbindung ausgebildet. Bei Kupfer ist der erste Verbindungsweg beispielsweise durch Kabel mit verdrillten Adernpaaren, beispielsweise ein Kabel mit verdrillten Adernpaaren ohne Schirm (UTP - Unshielded Twisted Pair), ausgebildet. Bei drahtlos ist der erste Verbindungsweg 6 im Wesentlichen als Funkstrecke ausgebildet, und die erste Steuereinheit 3 und/oder die zweite Steuereinheit 4 weisen einen Funkempfänger und/oder Funksender auf bzw. sind damit verbunden.

Die Steuereinheiten 3 ermittelt eine Laufzeit für die Datenübermittlung über das Bordnetzwerk zur Steuereinheiten 4. Wichtig ist, dass die Ermittlung der Laufzeit in irgendeiner Form auf der Basis einer tatsächlichen physischen Gegebenheit des Übertragungsweges von dem ersten Steuereinheiten 3 zur Steuereinheit 4 erfolgt, d.h., dass es eine physische Gegebenheit oder Eigenschaft des Übertragungsweges gibt, deren Änderung zu einer Änderung der ermittelten Laufzeit führt.

Hierbei ermittelt die eine Steuereinheit 3 eine Laufzeit für die Datenübermittlung über das Netzwerk zur Steuereinheit 4. Dies kann auf alternative Weise geschehen. Beispielsweise kann die Laufzeit im Zuge einer Zeitsynchronisation zwischen dem ersten Teilnehmer und dem zweiten Teilnehmer, etwa nach dem Zeitsynchronisationsstandard IEEE 802.1AS und dem darin enthaltenen PTP-Protokoll, erfolgen. So können etwa die im Rahmen dieses Protokolls implementierten "Delay Request"- und "Peer Delay"-Nachrichten als Datenpakete verwendet werden. Das Verfahren ist jedoch hierauf nicht beschränkt. Wichtig ist nur, dass die Ermittlung der Laufzeit in irgendeiner Form auf der Basis einer tat-sächlichen physischen Gegebenheit des Übertragungsweges von dem ersten Teilnehmer/Steuereinheit 3 zum zweiten Teilnehmer/Steuereinheit 4 erfolgt, d.h., dass es eine physische Gegebenheit oder Eigenschaft des Übertragungsweges gibt, deren Änderung zu einer Änderung der ermittelten Laufzeit führt.

Weiterhin ermittelt die erste Steuereinheit 3 die Nachrichtenfrequenz, die sich im Prinzip aus der Geschwindigkeit von PLL und Quarz ableitet, der gegenüberliegenden Steuereinheit 4. Aus diesen beiden Werten, welche sich ständig verändern auf Grund von Temperatur, Alterung usw. leitet die Steuereinheit 3 einen Schlüssel zur Verschlüsselung dieser Zeitnachrichten ab.

Die Zeitsynchronisationsnachrichten werden mit dem erzeugten dynamischen Schlüssel verschlüsselt, welcher sich generell ausgedrückt aus individuellen Parametern zum Verbindungspartner ableiten lässt.

Wie in Fig. 3 dargestellt ist zusätzlich auf Basis der Leitungsverzögerung 221 und der Nachrichtenfrequenz 213 ein individueller und sich ständig veränderter Schlüssel generiert werden. Dieser Schlüssel ist einmalig pro Zeiteinheit und auch pro Link unterschiedlich. Durch diesen Ansatz gibt es keinen Schlüssel zweimal im Netzwerk. Durch die Generierung der Schlüssel aus der Kombination von Punkt-zu-Punkt-Leitungsverzögerung und der Frequenz des Quarzes wird der Schlüssel besonders resistent gegen Umgehungsversuche, da sich zum einen der Schlüssel ständig verändert und zum anderen auf jedem Link im Fahrzeugnetzwerk unterschiedlich sein wird.

Die beiden Werte können entweder direkt in Kombination verwendet werden oder noch um andere statische Werte, welche beiden Steuergeräten bekannt sein müssen wie bspw. die Adresse, erweitert werden, um die Schlüssel zu generieren. Die jeweilige Steuereinheit, wobei das Verfahren auf beide Steuereinheiten, bzw. Teilnehmer/Linkpartner ausführbar sind, ermittelt daraus einen Zufallswert um den individuellen und nur kurzfristig geltenden Schlüssel für die Verschlüsselung zu erhalten. Der Schlüssel verändert sich immer wieder, basierend auf den voran-gegangenen Messungen, welche keinen Zusatzaufwand darstellen, da diese zur Zeitsynchronisation benutzt werden.

Die Art des Übertragungsmediums 12 wird einem Programm 13 im Ethernet-Bordnetz 2 mitgeteilt. Das Programm 13 kann beispielsweise in der ersten Steuereinheit 3, der zweiten Steuereinheit 4 oder der dritten Steuereinheit 5 oder einer weiteren Steuereinheit des Ethernet-Bordnetzes 2 vorhanden sein. Abhängig von der Art des Übertragungsmediums 12 wird eine Verbindungswegwahl 14 angepasst. So kann das Programm 13 beispielsweise durch die Verbindungswegwahl 14 Daten über einen anderen Verbindungsweg als vor der Verbindungswegwahl senden. Das Programm 13 kann aber beispielsweise auch das Senden von Daten durch die Verbindungswegwahl 14 unterbrechen und zu einem späteren Zeitpunkt wieder aufnehmen.

Gemäß dem Ausführungsbeispiel wird dem ersten Verbindungsweg 6 anhand der Art des Übertragungsmediums 12 ein Übertragungssicherheitswert 15 zugewiesen. Durch den Übertragungssicherheitswert wird eine Verlustwahrscheinlichkeit von über den Verbindungsweg übertragenen Daten beschrieben. Der Übertragungssicherheitswert 15 lässt also eine Aussage zu, wie zuverlässig die Daten über den ersten Verbindungsweg übertragen werden können. Dies wird der Entropiequelle 200 zugeführt. Ist beispielsweise ein Sicherheitsgrenzwert unter-schritten und die Daten können nur unsicher übertragen werden, so ist damit zu rechnen, dass die Daten verzögert ihr Ziel erreichen oder aber, falls sich ein nochmaliges Senden aufgrund der benötigten Aktualität der Daten nicht lohnt, gar nicht ihr Ziel erreichen.

Gemäß einem weiteren Ausführungsbeispiel werden Laufzeiten von einer Mehrzahl von Signalen auf dem ersten Verbindungsweg 6 bestimmt, und die schnellste Laufzeit der Mehrzahl der Signale wird ausgewählt. Die Maximalgeschwindigkeit 11 des ersten Verbindungswegs 6 wird dann anhand der schnellsten Laufzeit bestimmt.

Eine Steuereinheit startet die Verzögerungsmessung und wartet auf dem Empfang der Linkpartner Nachrichten. Auf Basis des Empfangs der Nachrichten am Beispiel PTP kann die Leitungsverzögerung gemessen werden. Wenn der eine Linkpartner die Verzögerungsmessung startet, dann bekommt dies der andere Linkpartner zwangsläufig mit und soll ebenfalls eine Messung starten, damit diese beiden Messungen auch einen zusammengehörigen Messwert generieren können,

Analog zu der vorstehend beschriebenen Vorgehensweise kann auch die Art des Übertragungsmediums 12 für den zweiten Verbindungsweg 7 und/oder den dritten Verbindungsweg 8 bestimmt werden.

Die jeweiligen aufgenommenen Werte sind unterschiedlich, bleiben jeweils geheim und im Steuergerät abgespeichert, und werden zudem nicht über das Netzwerk übertragen - müssen sie auch nicht. Dass Herausfinden des Schlüssels durch bloßes Probieren ist hinreichend unwahrscheinlich. Unter Berücksichtigung der beiden Werte wird ein individueller Schlüssel generiert. Zum einen ist die Frequenz eines jeden Quarzes unterschiedlich und zum anderen ist die Leitungsverzögerung jedes Links unterschiedlich. Hier werden zwei schwankende Werte addiert und geben einen noch schwerer zu erratenden dritten Wert - den Wert des Schlüssels. Die Leitungsverzögerung kann typischerweise im Bereich von 50-500 Nanosekunden ausfallen und die Frequenz ist ein Parameter und wird in +/- ppm angegeben. Die Leitungsverzögerung hin und rückwärts basiert auf dem gleichen Kanal, weshalb die berechneten Werte auf beiden Seiten des Links gleich sind. Die Parameter müssen deshalb nicht ausgetauscht werden. Somit haben beide Partner nahezu zur gleichen Zeit die gleichen Werte zur Generierung des Schlüssels. Der eine Linkpartner verschlüsselt mithilfe dieser beider Werte entstehend aus der letzten Messung und der andere Linkpartner entschlüsselt mit seinen letzten Werten.

So ist es auch vorgesehen, dass eine Laufzeit 16 eines zweiten Signals 17 auf dem zweiten Verbindungsweg 7 bestimmt wird. Es wird dann eine Maximalgeschwindigkeit 18 des zweiten Verbindungswegs 7 anhand der Laufzeit 16 des zweiten Signals 17 bestimmt. Anhand der Maximalgeschwindigkeit 18 des zweiten Verbindungswegs 7 wiederum wird eine Art des Übertragungsmediums 19 des zweiten Verbindungswegs 7 bestimmt.

Es ist vorteilhaft, den aktuellen Schlüssel A1 zu verwenden, solange keine neue Leitungsmessung durchgeführt wird. Somit weiß der Linkpartner immer, welcher Schlüssel zu verwenden ist, wenn keine neue Leitungsmessung vorher angestoßen wurde. Ein neuer Schlüssel soll/kann entweder zyklisch generiert werden, z. B. vorgegebene Frequenz, nach Bedarf gestartet werden durch einen Trigger oder immer direkt vor dem Senden von wichtigen Nachrichten.

Sowohl die erste Steuereinheit 3 als auch die zweite Steuereinheit 4 und auch die dritte Steuereinheit 5 können in einem Normalbetriebsmodus oder in einem Energiesparmodus betrieben werden. Im Energiesparmodus verbraucht die jeweilige Steuereinheit weniger Energie als im Normalbetriebsmodus. Es kann beispielsweise im Energiesparmodus die Geschwindigkeit eines Ports der jeweiligen Steuereinheit gegenüber der Geschwindigkeit im Normalbetriebsmodus reduziert werden. Die reduzierte Geschwindigkeit des Ports hat dann auch Aus-wirkung auf die jeweilige Maximalgeschwindigkeit des jeweiligen Verbindungs-wegs.

Gemäß einem weiteren Ausführungsbeispiel kann von der ersten Steuereinheit 3 eine Dienstnachricht 20 an die dritte Steuereinheit 8 gesendet werden. Durch die Dienstnachricht 20 wird dann die Bestimmung einer Laufzeit 21 eines dritten Signals 22 ausgelöst. Das dritte Signal 22 wird zwischen der zweiten Steuereinheit 4 und der dritten Steuereinheit 5 gesendet. Die Laufzeit 21 des dritten Signals 22 wird gemäß dem Ausführungsbeispiel durch die dritte Steuereinheit 5 bestimmt.

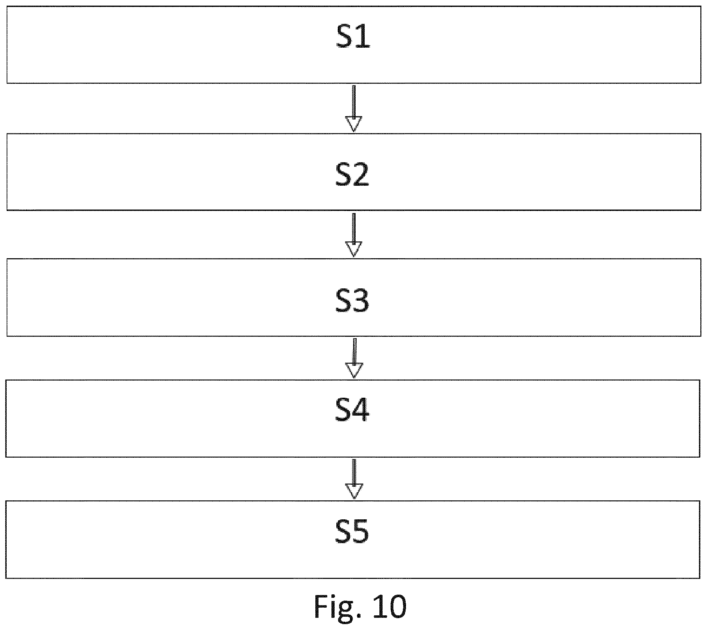

Fig. 10 beschreibt allgemein das Verfahren zur Laufzeitbestimmung. In einem Schritt S1 wird die Laufzeit 9 des ersten Signals 10 bestimmt. In einem Schritt S2 wird die Art des Übertragungsmediums 12 bestimmt. In einem Schritt S3 wird schließlich das Programm 13 angepasst. In einem Schritt S4 wird die Laufzeit 9 des ersten Signals 10 bestimmt. Dadurch kann in einem Schritt S5 die Art des Übertragungsmediums 12 bestimmt werden. Die Art des Übertragungsmediums 12 kann wiederum folgende Parameter umfassen: Geschwindigkeit 23, Medium 24, Kabellänge 25, Leistungsübertragung 26, Bitfehlerrate 27. In einem Schritt S6 folgt dann schließlich die Anpassung des Programms 13 und die Verbindungswegwahl 14.

Gemäß diesem Beispiel wird vorgeschlagen, zwischen verbundenen Steuereinheiten bzw. Controllern die Laufzeit der Signale zu messen. Zum Messen der Laufzeiten 9, 16 und 21 können beispielsweise Methoden des Standards IEEE 1588 oder IEEE 802.1AS genutzt werden. Auch durch TTEthernet (time triggered ethernet) können beispielsweise Methoden bereitgestellt werden, um die jeweilige Laufzeit 9, 16 und 21 zu bestimmen.

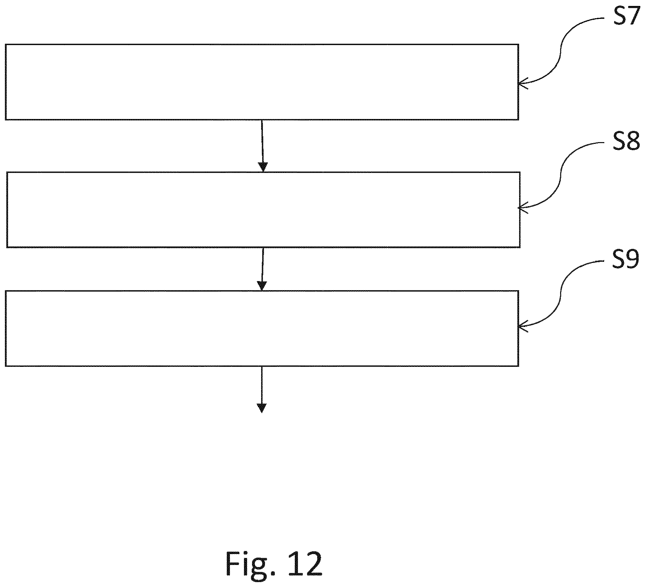

Fig. 12 zeigt das Bestimmen der jeweiligen Laufzeit 9, 16 und 21. Es wird eine lokale und eine nicht lokale Abfrage der Laufzeit beschrieben. Das Programm 13, welches insbesondere auf mindestens einer Steuereinheit ausgeführt wird, bestimmt vorzugsweise erst mal lokal die lokale Laufzeit oder die Laufzeiten, wenn mehr als eine Steuereinheit direkt verbunden ist. Danach werden vorzugsweise andere Steuereinheiten über ein serviceorientiertes Verfahren, beispielsweise SOME/IP (Scalable Service-Oriented Middleware over IP) deren Laufzeit zu dem Nachbarn abgefragt. Dies kann entweder zentral oder dezentral umgesetzt wer-den. Die Abfrage kann entweder einmal, bei Systemstart, Definition oder nach Softwareupdate durchgeführt werden, oder aber zyklisch ausgeführt werden, um dynamische Änderungen zu erkennen. Diese Daten werden dann, insbesondere inklusive der Adressen der Steuereinheiten, beim ersten Mal gespeichert und zugeordnet. In einem Schritt S7 wird die jeweilige Laufzeit zu den direkt verbundenen Steuereinheiten bestimmt. In einem Schritt S8 werden die jeweiligen Laufzeiten von anderen Verbindungswegen abgefragt. In einem Schritt S9 werden die jeweiligen Laufzeiten und deren zugehörige Verbindungspartner gespeichert.

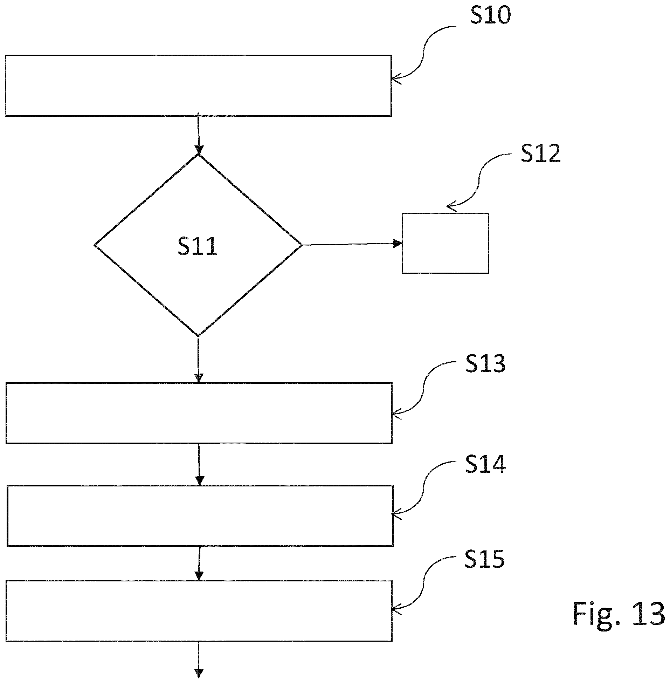

Fig. 13 zeigt ein weiteres Verfahren, um auf Basis einer Referenzmessung die anderen Geschwindigkeiten abzuleiten. Wenn beispielsweise die aktuelle Temperatur sehr hoch ist oder schlechte Kabel verwendet werden, dann können vorgespeicherte Werte eventuell zu ungenau sein. Daher wird vorgeschlagen, dass die Anwendung bzw. das Programm 13 an ihrer eigenen Steuereinheit selber Messungen durchführt, insbesondere unter Kenntnis der eigenen Parameter, und anderen Geschwindigkeiten, welche dann daraus abgeleitet und berechnet werden können. In einem Schritt S10 wird eine Analyse pro lokalem Ethernet-Port durchgeführt. In einem Schritt S11 wird abgefragt, ob Kanalparameter bekannt sind. Ist dies nicht der Fall, so folgt ein Schritt S12, und das Verfahren ist beendet. Ist dies der Fall, so folgt ein Schritt S13, in welchem die jeweilige Laufzeit 9, 16 und 21 bestimmt wird. In einem Schritt S14 erfolgt die Speicherung, und die bestimmte Laufzeit wird in Bezug zu den Kanalparametern gesetzt. In einem Schritt S15 wird eine Referenzwertliste erstellt.

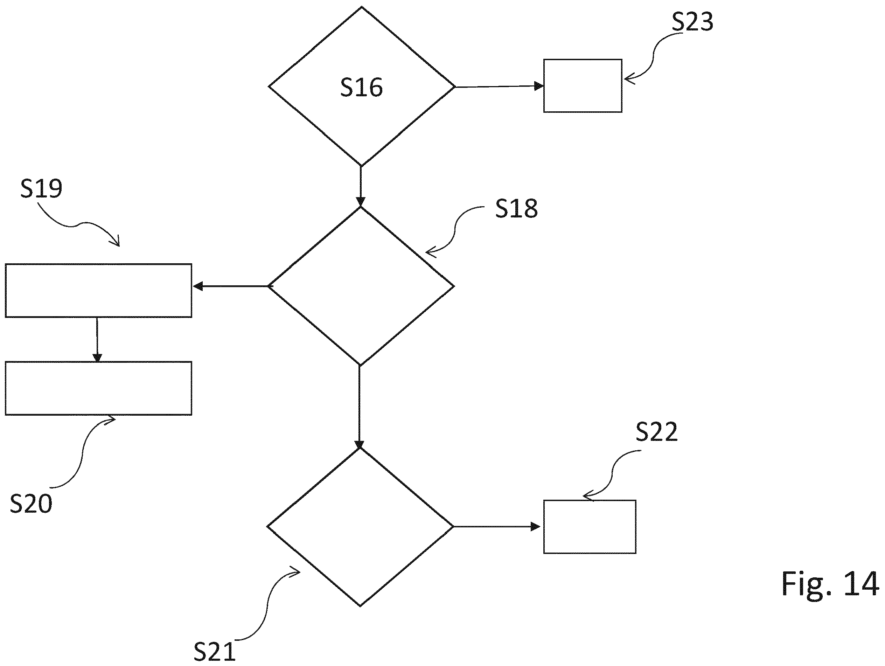

Fig. 14 zeigt eine mögliche Optimierung durch Wissen über die Art des Übertragungsmediums 12, 19. In einem Schritt S16 wird entschieden, ob die Art des Übertragungsmediums 12, 19 Kupfer ist. Ist dies der Fall, so folgt ein Schritt S17, bei welchem bestätigt wird, dass PoDL (Power over Data Lines), also die Stromversorgung über Ethernet möglich ist. Wird im Schritt S16 entschieden, dass das Medium nicht Kupfer ist, so folgt ein Schritt S18. Im Schritt S18 wird überprüft, ob die Art des Übertragungsmediums 12 optisch ist. Ist dies der Fall, so folgt ein Schritt S19. Im Schritt S19 wird festgestellt, dass dadurch eine geringere Bitfehlerrate vorliegt und dadurch eine höhere Zuverlässigkeit dieses Verbindungswegs vor-liegt. In einem Schritt S20 wird die Möglichkeit gegeben RX (Empfangseinheit) oder TX (Sendeeinheit) der Steuereinheit 3, 4, 5 zu deaktivieren, falls dies nicht benötigt ist.

Wird im Schritt S18 entschieden, dass das Medium bzw. die Art des Übertragungsmediums 12 nicht optisch sind, so wird in einem Schritt S21 davon ausgegangen, dass der jeweilige Verbindungsweg als der betreffende Verbindungsweg als direkte MII-Verbindung (Media Independent Interface) ausgebildet ist. In diesem Fall eignet sich die jeweilige Steuereinheit beispielsweise für IEEE 802.1 CB (Frame Replication and Elimination for Redundancy).

Weitere Möglichkeiten ergeben sich aus dem Wissen über die Übertragungsgeschwindigkeit. Kombiniert mit den aktuellen Datenströmen können beispielsweise Daten gezielt über eine hochbandbreitige Verbindung übertragen werden und somit andere, nicht benötigte Verbindungswege deaktiviert werden, wodurch Energie gespart werden kann.

Außerdem besteht bei hochbandbreitigen Verbindungen die Möglichkeit, Redundanzmechanismen (z.B. IEEE 802.1 CB) zu verwenden. Da die Daten hierbei kontinuierlich redundant übertragen werden, ist dafür eine hohe Bandbreite notwendig. Denkbar ist auch eine Anpassung der Anwendung je nach Geschwindigkeit des Übertragungswegs. Eine Kamera kann beispielsweise je nach Geschwindigkeit des Links bzw. des Verbindungswegs 6, 7, 8 die Auflösung der zu übertragenden Bilddaten anpassen.

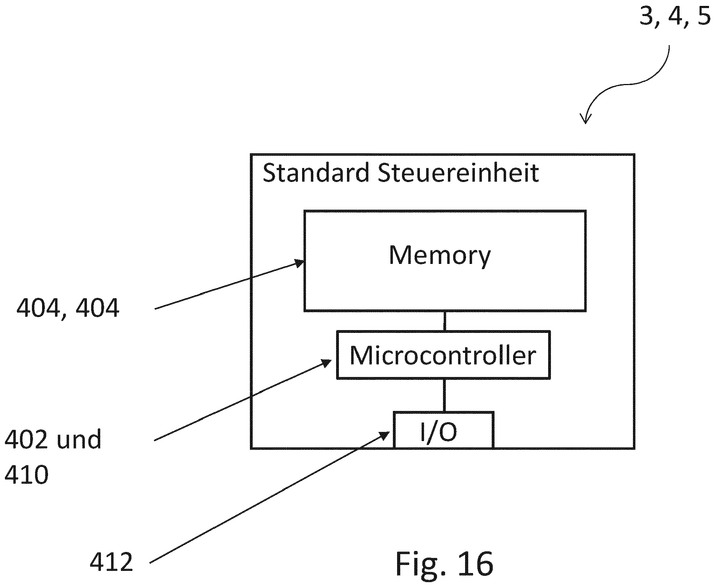

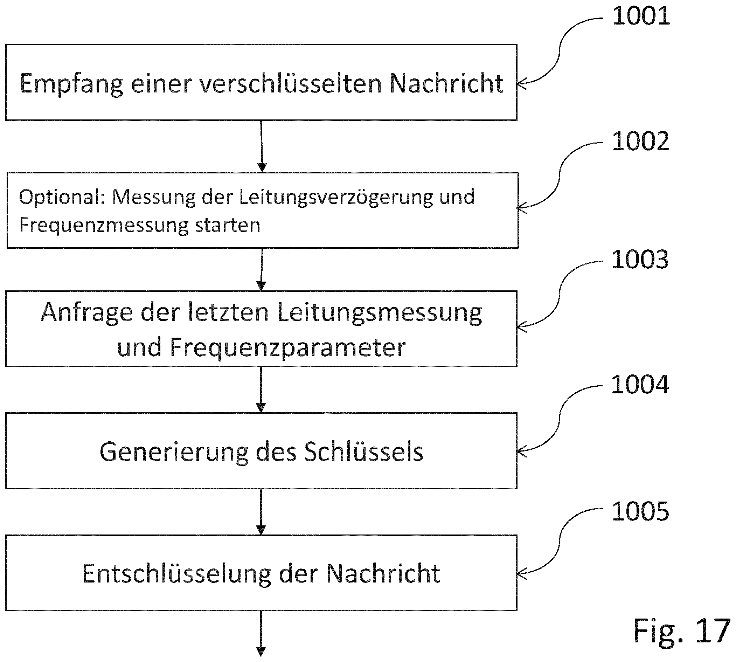

Die Steuereinheit 3, 4, 5 in Fig. 16 umfasst neben einem Mikroprozessor 402 einen flüchtigen und nichtflüchtigen Speicher 404, 406, zwei Kommunikationsschnitt-stellen 408 sowie einen synchronisierbaren Zeitgeber 410. Die Elemente des Netzwerkgeräts sind über eine oder mehrere Datenverbindungen oder -busse 412 kommunikativ miteinander verbunden. Der nichtflüchtige Speicher 406 enthält Programminstruktionen die, wenn sie von dem Mikroprozessor 402 ausgeführt werden, zumindest eine Ausgestaltung des erfindungsgemäßen Verfahrens implementieren und die Entropiequelle im flüchtigen und/oder nichtflüchtigen Speicher 404, 406 gebildet wird, aus der dann die dynamischen Schlüssel 28 für die Verbindungswege 6 gebildet werden. In Fig. 17 ist der Dekodierungsablauf des dynamischen Schlüssels bei der Entschlüsselung angegeben.

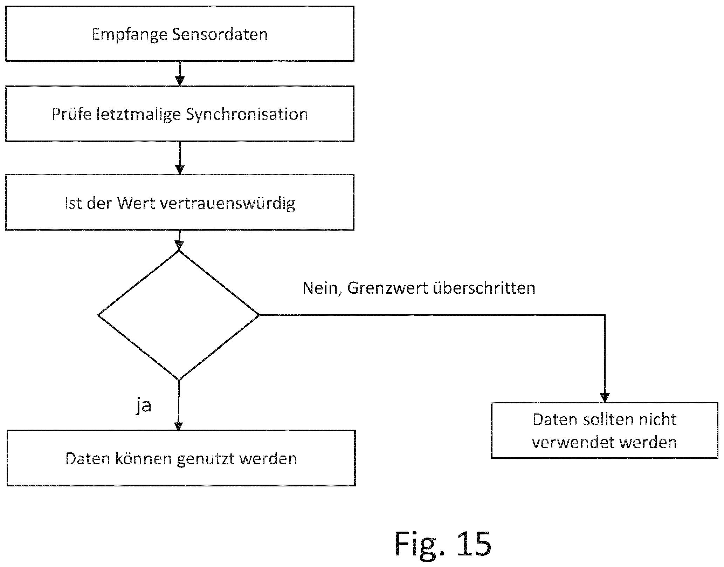

In Fig. 15 ist dargestellt, wie eine Bewertung der Verwendung von empfangenen Daten auf Basis dessen letzten erfolgreichen Synchronisationszeitpunktes erfolgt. Durch diesen Ablauf kann ermittelt werden, ob die geprüften Daten, die sich vor einer Speicherung befinden für den jeweiligen Einsatz auch eignen. Besonders vorteilhaft ist dies, wenn die Speicherung auf einem Datenrekorder erfolgt. Für den Datenrekorder ist es maßgeblich interessant, ob die Daten auch inhaltlich korrekt sind. Im Falle eines Unfalles ist es wichtig, ob bspw. die Kamera den Fußgänger erkannt hat oder nicht. Wenn falsche Daten aufgezeichnet werden oder Daten mit einem falschen Zeitpunkt, dann ist die Aufzeichnung ungültig und kann ohne das Verfahren nicht als solche erkannt werden.

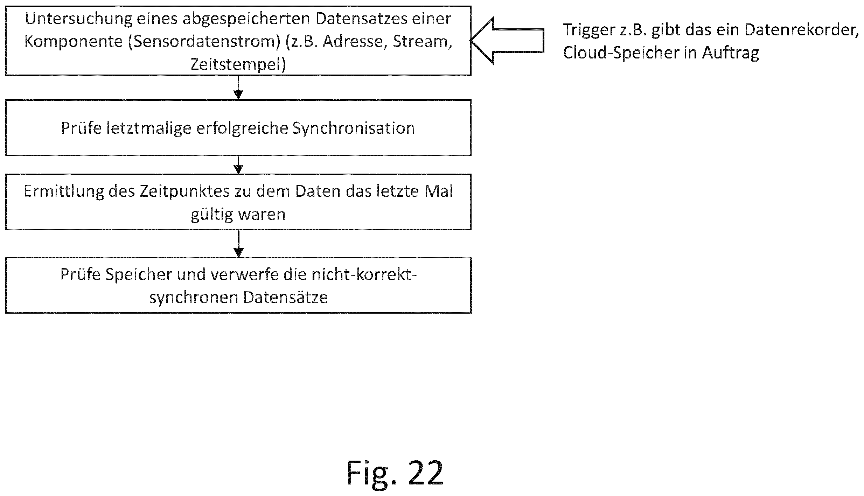

Die abfragende Komponente analysiert einen Datenstrom und dessen Absender, wie in Fig. 22 dargestellt. Auf Basis des Verfahrens kann ermittelt werden, wann den Daten das letzte Mal vertraut wurde. Die nominalen Grenzwerte hierbei bestimmen entweder die Funktionen, die Systemhersteller oder den Anwendungsfall als solchen selbst. Dieser kann pro ECU und pro Anwendungsfall verschieden sein. Auf Basis dieses Grenzwertes können die Daten für gültig, ungültig oder auch nicht vertrauenswürdig eingestuft werden.

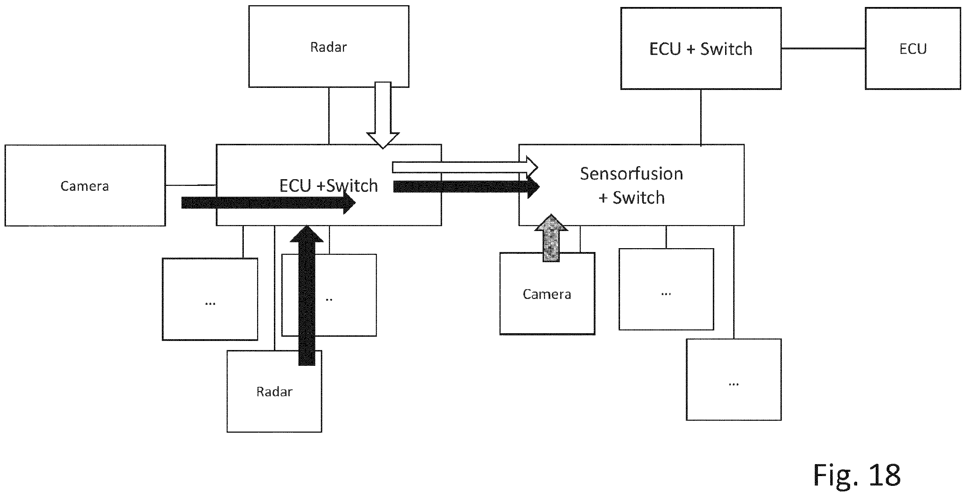

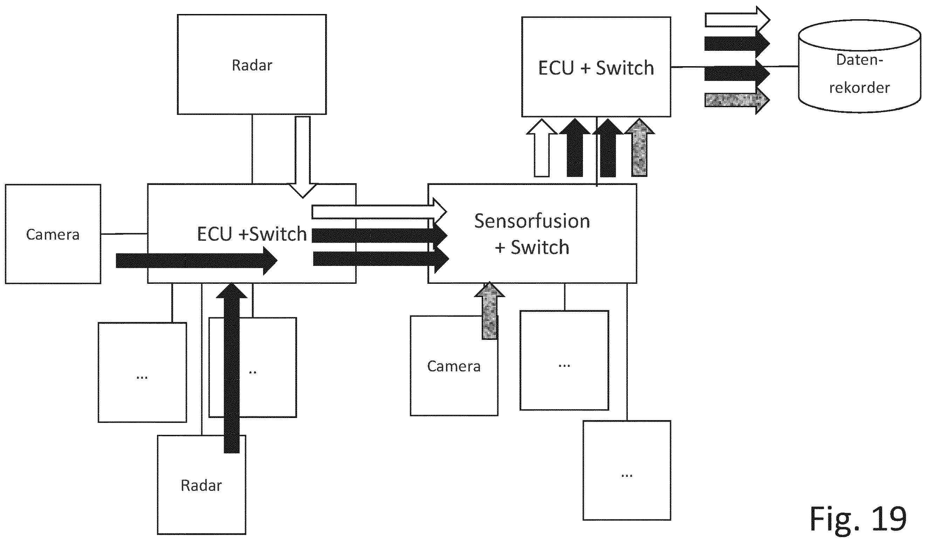

Fig. 18 und Fig. 19 zeigen zwei Anwendungsfälle bei denen die Zeitsynchronisation essentiell wichtig ist, und das Verfahren zum Einsatz kommt. Zum einen müssen verschiedene Daten von verschiedenen Sensoren/Steuergeräten fusioniert werden, die auf Basis der Zeitinformationen in der Sensornachricht enthalten sind, und zum anderen können sie auch abgespeichert werden, um einen Nachweis im Falle eines Fehlers zu haben.

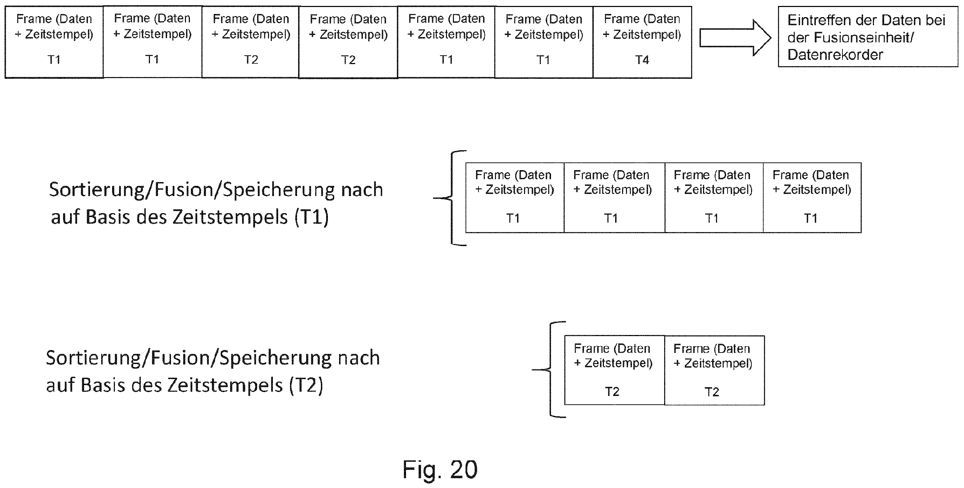

Fig. 20 zeigt, dass sowohl bei der Fusion der Daten und als auch der Abspeicherung als Basis die Zeitstempel in den Daten benutzt werden, damit die richtigen Daten zeitlich zugeordnet werden können.

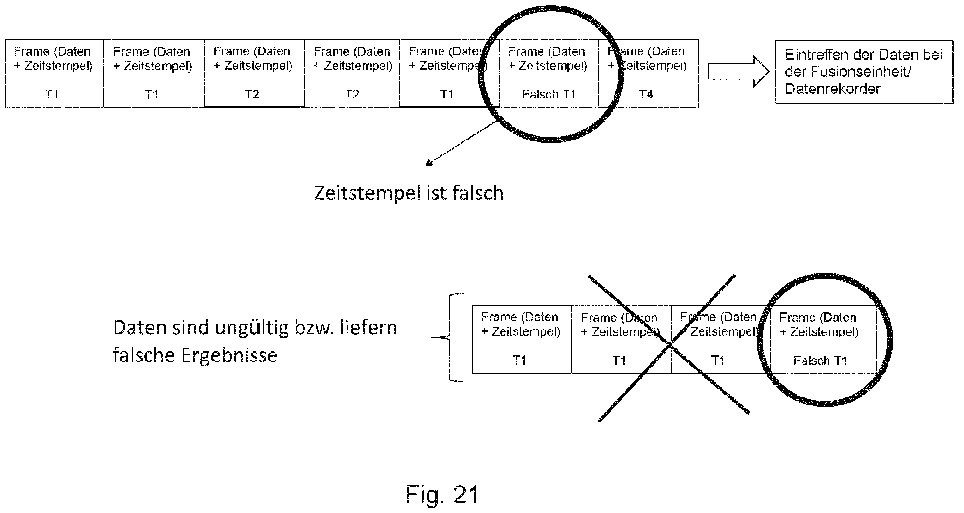

Fig. 21 zeigt das Eintreffen verschiedener Sensordaten-Frames an einer Fusionseinheit oder auch bspw. an einem Datenrekorder. Dieser ordnet die Daten nicht nach deren Eintreffens-Reihenfolge, sondern nach deren Zeitstempel, die auf Basis einer vorhergehenden Zeitsynchronisation erfolgt ist, zu. Da in einem Netzwerk die Daten unterschiedlich lange Wege nehmen müssen, wird typischerweise auf Basis der Erstellung dieser Sensordaten sortiert, wenn diese aufgenommen wurden.

In Fig. 21 ist dargestellt, dass ein Zeitstempel falsch, d.h. dass eine Inkonsistenz in den Sensordaten bei der Fusion eingetreten ist, bei der die Zeitsynchronisation fehlerhaft ist, und bei dem das hier vorgeschlagene Verfahren nicht zum Einsatz kam. Durch das Verfahren wird Präzision und Genauigkeit der Uhrensynchronisation für die Echtzeitfähigkeit des Ethernet-Bordnetzwerkes verbessert. Ein Maß für die Qualität eines Synchronisationsprotokolls ist vor allem dessen erzielbare Synchronisationsgenauigkeit, welche sich als Zusatzinformation aus dem Ver-fahren ableiten lässt.

Aus Fig. 22 ist der Ablauf zu entnehmen, in welcher Art eine rückwirkende Löschung von Daten erfolgt, wenn der Synchronisationszeitpunkt oberhalb des Grenzwertes liegt angeben. Das Verfahren findet bspw. auch Anwendung, wenn bereits gespeicherte Daten (oder kurz vor der Speicherung) vorliegen, wie beim Anwendungsfall Datenrekorder. Für den Datenrekorder ist es maßgeblich interessant, ob die Daten auch inhaltlich korrekt sind - im Fall eines Unfalles ist es wichtig, ob bspw. die Kamera den Fußgänger erkannt hat oder nicht. Wenn falsche Daten aufgezeichnet werden oder Daten mit einem falschen Zeitpunkt, dann ist die Aufzeichnung ungültig. Die abfragende Komponente analysiert einen Datenstrom und dessen Absender wie in Fig. 22 angegeben. Auf Basis des Verfahrens kann ermittelt werden, wann den Daten das letzte Mal vertraut wurde. Die nominalen Grenzwerte hierbei bestimmen entweder die Funktionen, die Systemhersteller oder der Anwendungsfall als solches selbst. Dieser kann pro ECU und pro Anwendungsfall verschieden sein. Auf Basis dieses Grenzwertes können die Daten für gültig, ungültig oder auch nicht vertrauenswürdig eingestuft werden.

Die abfragende Komponente kann ein Datenrekorder, ein Cloud-Speicher sein, der einen Auftrag zur Untersuchung eines abgespeicherten Datensatzes einer Komponente, wie einen Sensordatenstrom, überprüfen möchte. Hierzu können bspw. die Adresse, Stream, Zeitstempel geprüft werden. Es wird hierzu letztmalig eine erfolgreiche Synchronisation geprüft, und eine Ermittlung des Zeitpunktes, zu dem Daten das letzte Mal gültig waren, durchgeführt. Es erfolgt eine Prüfung des Speichers, und es werden nicht-korrekt-synchrone Datensätze hierbei verworfen.

Bezugszeichenliste

| 1 | Kraftfahrzeug |
|---|---|
| 2 | Ethernet-Bordnetz |
| 3 | erste Steuereinheit |
| 4 | zweite Steuereinheit |
| 5 | dritte Steuereinheit |
| 6 | erster Verbindungsweg |
| 7 | zweiter Verbindungsweg |
| 8 | dritter Verbindungsweg |
| 9 | Laufzeit des ersten Signals |
| 10 | erstes Signal |
| 11 | Maximalgeschwindigkeit des ersten Verbindungswegs |
| 12 | Art des Übertragungsmediums des ersten Verbindungswegs |
| 13 | Programm |
| 14 | Verbindungswegwahl |
| 15 | Übertragungssicherheitswert |
| 16 | Laufzeit des zweiten Signals |
| 17 | zweites Signal |
| 18 | Maximalgeschwindigkeit des zweiten Verbindungswegs |
| 19 | Art des Übertragungsmediums des zweiten Verbindungswegs |

| 20 | Dienstnachricht |
|----|----|
| 21 | Laufzeit des dritten Signals |
| 22 | drittes Signal |
| 23 | Geschwindigkeit |
| 24 | Medium |
| 25 | Kabellänge |
| 26 | Leistungsübertragung |
| 27 | Bitfehlerrate |
| 28 | dynamischer Schlüssel |
| 29 | Zeitsynchronisationsnachricht |
| 200 | Entropiequelle |
| 211 | Senden zum Zeitpunkt t1 |
| 212 | Empfang zum Zeitpunkt t4 |
| 213 | Empfang zum Zeitpunkt t4 |
| 221 | Empfang zum Zeitpunkt t2 |
| 222 | Senden zum Zeitpunkt t3 |
| 223 | Verzögertes Senden zum Zeitpunkt t3 |
| 300 | verschlüsselte Nachricht zum Zeitpunkt t5 |
| 400 | Steuereinheit |
| 402 | Mikroprozessor |
| 404 | RAM |
| 406 | ROM |
| 408 | Kommunikationsschnittstelle |
| 410 | Zeitgeber |
| 412 | Bus / Kommunikationsinterface |
| 1001 | Empfang einer verschlüsselten Nachricht |
| 1002 | Messung der Leitungsverzögerung und Frequenzmessung starten |
| 1003 | Anfrage der letzten Leitungsmessung und Frequenzparameter |
| 1004 | Generierung des Schlüssels |
| 1005 | Entschlüsselung der Nachricht |

**Patentansprüche**

1.  Verfahren zur Prüfung der Gültigkeit von Sensordaten eines Ethernet-Bordnetzes (2) in einem Kraftfahrzeug (1), bei welchem folgende Schritte durchgeführt werden:

    d) Bestimmen einer Laufzeit (9) eines ersten Signals (10) auf einem ersten Verbindungsweg (6) zwischen einer ersten Steuereinheit (3) des Ethernet-Bordnetzes (2) und einer zweiten Steuereinheit (4) des Ethernet-Bordnetzes (2);
    e) Bestimmen einer Maximalgeschwindigkeit (11) des ersten Verbindungswegs (6) anhand der Laufzeit (9); und
    f) Bestimmen einer Art eines Übertragungsmediums (12) des ersten Verbindungswegs (6) anhand der Maximalgeschwindigkeit (11), **dadurch gekennzeichnet, dass** die folgenden Schritte durchgeführt werden:

    - Identifikation mindestens einer ersten Steuereinheit (3) des Ethernet-Bordnetzes (2);
    - Synchronisation von mindestens einer ersten Steuereinheit (3) des Ethernet-Bordnetzes (2);
    - Ermittlung des Synchronisationsintervalls der ersten Steuereinheit (3);
    - Ermittlung eines Drifts eines Zeitgebers (410) der ersten Steuereinheit (3);
    - Ermittlung eines Zeitstempels der ersten Steuereinheit (3);
    - Auslesen eines Zeitstempels der ersten Steuereinheit (3);
    - Vergleich des Zeitstempels der ersten Steuereinheit (3) mit einer Referenzuhr des Ethernet-Bordnetzes (2);
    - Durchführung einer Laufzeitmessung der ersten Steuereinhei (3);
    - Ermittlung der Geschwindigkeit des dazugehörigen Taktgebers;
    - Ermittlung der Zeitdifferenz des Synchronisationsintervalls;
    - Ermittlung der letzten Synchronisation, wann die letzte erfolgreiche Synchronisation eines Knotens stattgefunden hat und wie lange die Steuereinheit (3) des Knotens Knoten nicht mehr synchronisiert wurde.

2.  Verfahren nach Anspruch 1, **dadurch gekennzeichnet, dass** die Ermittlung des Drifts des Zeitgebers mittels des Protokolls IEEE 802.1AS D8.3 erfolgt.

3.  Verfahren nach Anspruch 1 oder 2, **dadurch gekennzeichnet, dass** der Vergleich des Zeitstempels mit einer Referenzuhr des Ethernet-Bordnetzes (3) eine Differenzbildung in der Form TAbweichung = TRferenz-Tverdächtig erfolgt.

4.  Verfahren nach einem der Ansprüche 1 bis 3, **dadurch gekennzeichnet, dass** die Geschwindigkeit des Taktgebers mittels des PTP Neighbor Rate Ratio, NRR, Verfahren ermittelt wird.

5.  Verfahren nach einem der Ansprüche 1 bis 4, **dadurch gekennzeichnet, dass** die Art des Übertragungsmediums (12) und die

    - Ermittlung des Synchronisationsintervalls
    - Ermittlung eines Drifts eines Zeitgebers (410) der ersten Steuereinheit (3)
    - Ermittlung eines Zeitstempels der ersten Steuereinheit (3)
    - Ermittlung der Geschwindigkeit des dazugehörigen Taktgebers
    - Ermittlung der Zeitdifferenz des Synchronisationsintervalls
    - Ermittlung der letzten Synchronisation, wann die letzte erfolgreiche Synchronisation eines Knotens stattgefunden hat und wie lange die Sterueinheit (3) Knoten nicht mehr synchronisiert wurde

einem Programm (13) im Ethernet-Bordnetz (2) mitgeteilt wird und eine Verbindungswegwahl (14) des Programms (13) abhängig von der Art des Übertragungsmediums (12) angepasst wird.

6. Verfahren nach einem der Ansprüche 1 bis 5, **dadurch gekennzeichnet, dass** die Art des Übertragungsmediums (12) als optisch, Kupfer oder drahtlos bestimmt wird.

7. Verfahren nach einem der vorhergehenden Ansprüche, **dadurch gekennzeichnet, dass** dem ersten Verbindungsweg (6) anhand der Art des Übertragungsmediums (12) ein Übertragungssicherheitswert (15), welcher eine Verlustwahrscheinlichkeit von über den ersten Verbindungsweg (6) übertragenen Daten beschreibt, zugewiesen wird.

8. Verfahren nach einem der vorhergehenden Ansprüche, **dadurch gekennzeichnet, dass** Laufzeiten von einer Mehrzahl von Signalen auf dem ersten Verbindungsweg (6) bestimmt werden und die schnellste Laufzeit der Mehrzahl der Signale ausgewählt wird, wobei die Maximalgeschwindigkeit (11) des ersten Verbindungsweges (6) anhand der schnellsten Laufzeit bestimmt wird.

9. Verfahren nach einem der vorhergehenden Ansprüche, **dadurch gekennzeichnet, dass** eine Laufzeit (16) eines zweiten Signals (17) auf einen vom ersten Verbindungsweg (6) unterschiedlichen zweiten Verbindungsweg (7) zwischen der ersten Steuereinheit (3) und der zweiten Steuereinheit (4) bestimmt wird, und eine Maximalgeschwindigkeit (11) des zweiten Verbindungswegs (7) bestimmt wird, wobei eine Art des Übertragungsmediums (19) des zweiten Verbindungsweges (7) anhand der Maximalgeschwindigkeit (11) des zweiten Verbindungsweges (7) bestimmt wird.

10. Verfahren nach einem der vorhergehenden Ansprüche, **dadurch gekennzeichnet, dass** das Verfahren nach einem Wechsel der ersten Steuereinheit (3) von einem Normalbetriebsmodus in einen Energiesparmodus und/oder vom Energiesparmodus in den Normalbetriebsmodus ausgeführt wird.

11. Verfahren nach einem der vorhergehenden Ansprüche, **dadurch gekennzeichnet, dass** die Laufzeit (9) des ersten Signals (10) mit der ersten Steuereinheit (3) bestimmt wird und eine Laufzeit (21) eines dritten Signals (22) auf einem nur indirekt mit der ersten Steuereinheit (3) verbundenen dritten Verbindungsweg (8) zwischen der zweiten Steuereinheit (4) und einer dritten Steuereinheit (5) des Ethernet-Bordnetzes (2) mit der dritten Steuereinheit (5) bestimmt wird, wobei die Bestimmung der Laufzeit (21) des dritten Signals (22) durch eine von der ersten Steuereinheit (3) an die dritte Steuereinheit (5) gesendete Dienst-nachricht (20) ausgelöst wird.

12. Steuereinheit für ein Ethernet-Bordnetz (2), welche als erste Steuereinheit (3) dazu ausgebildet ist:

    - ein Signal (10) an eine zweite Steuereinheit (4) des Ethernet-Bordnetzes (2) zu senden und das Signal (10) von der zweiten Steuereinheit (4) zu empfangen;
    - eine Laufzeit (9) des Signals (10) auf einem Verbindungsweg (6) zur zweiten Steuereinheit (4) zu bestimmen;
    - eine Maximalgeschwindigkeit (11) des Verbindungswegs (6) anhand der Laufzeit (9) zu bestimmen; und
    - eine Art eines Übertragungsmediums (12) des Verbindungswegs (6) anhand der Maximalgeschwindigkeit (11) zu bestimmen, mindestens umfasst
    - einen Mikroprozessor (402),
    - einen flüchtigen Speicher (404) und nichtflüchtigen Speicher (406),
    - mindestens zwei Kommunikationsschnittstellen (408),
    - einen synchronisierbaren Zeitgeber 410,

    der nichtflüchtige Speicher (406) Programminstruktionen enthält die, wenn sie von dem Mikroprozessor (402) ausgeführt werden,
    **dadurch gekennzeichnet, dass** zumindest eine Ausgestaltung des Verfahrens nach Anspruch 1 bis 10 implementierbar und ausführbar ist.

13. Ethernet-Bordnetz (2) für ein Kraftfahrzeug (1), mit einer ersten Steuereinheit (3) und einer zweiten Steuereinheit (4), wobei die Steuereinheiten (3, 4) über zumindest einen Verbindungsweg (6, 7) miteinander verbunden sind, und die erste Steuereinheit (3) gemäß Anspruch 11 ausgebildet ist.

14. Ethernet-Bordnetz nach Anspruch 11, **dadurch gekennzeichnet, dass** das Ethernet-Bordnetz (2) eine dritte Steuereinheit (5) aufweist, welche nur indirekt mit der ersten Steuereinheit (3) verbunden ist und über einen dritten Verbindungsweg (8) direkt mit der zweiten Steuereinheit (4) verbunden ist, wobei die dritte Steuereinheit (5) dazu ausgebildet ist, eine Laufzeit (21) eines dritten Signals (22) auf dem dritten Verbindungsweg (8) zu bestimmen, wobei die erste Steuereinheit (3) dazu ausgebildet ist, die Bestimmung der Laufzeit (21) des dritten Signals (22) durch eine Dienstnachricht (20) an die dritte Steuereinheit (5) auszulösen.

15. Computerprogrammprodukt umfassend Befehle, die bei der Ausführung des Programms durch einen Computer diesen veranlassen, das Verfahren (200) nach einem oder mehreren der Ansprüche 1 - 10 auszuführen.

16. Computerlesbareres Medium, auf dem das Computerprogrammprodukt nach Anspruch 14 gespeichert ist.

17. Fahrzeug mit mehreren Steuereinheiten (3, 4, 5) nach Anspruch 12 umfassendes Ethernet-Bordnetzwerk.

**Claims**

1. Method for checking the validity of sensor data of an Ethernet onboard network (2) in a motor vehicle (1), in which the following steps are carried out:

   d) determining a propagation time (9) of a first signal (10) on a first connecting path (6) between a first control unit (3) of the Ethernet onboard network (2) and a second control unit (4) of the Ethernet onboard network (2);
   e) determining a maximum speed (11) of the first connecting path (6) on the basis of the propagation time (9); and
   f) determining a type of a transmission medium (12) of the first connecting path (6) on the basis of the maximum speed (11),
   **characterized in that** the following steps are carried out:

   - identification of at least a first control unit (3) of the Ethernet onboard network (2);
   - synchronization of at least a first control unit (3) of the Ethernet onboard network (2);
   - ascertainment of the synchronization interval of the first control unit (3);
   - ascertainment of a drift of a timer (410) of the first control unit (3);
   - ascertainment of a timestamp of the first control unit (3);
   - reading a timestamp of the first control unit (3);
   - comparison of the timestamp of the first control unit (3) with a reference clock of the Ethernet onboard network (2);
   - performance of a propagation time measurement on the first control unit (3);
   - ascertainment of the speed of the associated clock generator;
   - ascertainment of the time difference of the synchronization interval;
   - ascertainment of the last synchronization, when the last successful synchronization of a node took place and for how long the control unit (3) of the node has not been synchronized again.

2. Method according to Claim 1, **characterized in that** the drift of the timer is ascertained by means of the protocol IEEE 802.1AS D8.3.

3. Method according to Claim 1 or 2, **characterized in that** the comparison of the timestamp with a reference clock of the Ethernet onboard network (3) results in a difference being calculated in the form Tdeviation = Treference - Tsuspect.

4. Method according to one of Claims 1 to 3, **characterized in that** the speed of the clock generator is ascertained by means of the PTP Neighbor Rate Ratio, NRR, method.

5. Method according to one of Claims 1 to 4, **characterized in that** the type of the transmission medium (12) and the

   - ascertainment of the synchronization interval
   - ascertainment of a drift of a timer (410) of the first control unit (3)
   - ascertainment of a timestamp of the first control unit (3)
   - ascertainment of the speed of the associated clock generator
   - ascertainment of the time difference of the synchronization interval
   - ascertainment of the last synchronization, when the last successful synchronization of a node took place and for how long the control unit (3) of the node has not been synchronized again

are communicated to a program (13) in the Ethernet onboard network (2) and a connecting path selection (14) of the program (13) is adapted on the basis of the type of the transmission medium (12).

6. Method according to one of Claims 1 to 5, **characterized in that** the type of the transmission medium (12) is determined as optical, copper or wireless.

7. Method according to one of the preceding claims, **characterized in that** a transmission security value (15), which describes a probability of loss of data transmitted by way of the first connecting path (6), is assigned to the first connecting path (6) on the basis of the type of the transmission medium (12).

8. Method according to one of the preceding claims, **characterized in that** propagation times of a plurality of signals on the first connecting path (6) are determined and the fastest propagation time of the plurality of signals is selected, the maximum speed (11) of the first connecting path (6) being determined on the basis of the fastest propagation time.

9. Method according to one of the preceding claims, **characterized in that** a propagation time (16) of a second signal (17) on a second connecting path (7), which is different from the first connecting path (6), between the first control unit (3) and the second control unit (4) is determined, and a maximum speed (11) of the second connecting path (7) is determined, a type of the transmission medium (19) of the second connecting path (7) being determined on the basis of the maximum speed (11) of the second connecting path (7).

10. Method according to one of the preceding claims, **characterized in that** the method is carried out after the first control unit (3) changes from a normal operating mode to an energy-saving mode and/or from the energy-saving mode to the normal operating mode.

11. Method according to one of the preceding claims, **characterized in that** the propagation time (9) of the first signal (10) is determined using the first control unit (3) and a propagation time (21) of a third signal (22) on a third connecting path (8), which is connected to the first control unit (3) only indirectly, between the second control unit (4) and a third control unit (5) of the Ethernet onboard network (2) is determined using the third control unit (5), the determination of the propagation time (21) of the third signal (22) being triggered by a service message (20) sent from the first control unit (3) to the third control unit (5).

12. Control unit for an Ethernet onboard network (2), which, as first control unit (3), is designed:

    - to send a signal (10) to a second control unit (4) of the Ethernet onboard network (2) and to receive the signal (10) from the second control unit (4);
    - to determine a propagation time (9) of the signal (10) on a connecting path (6) to the second control unit (4);
    - to determine a maximum speed (11) of the connecting path (6) on the basis of the propagation time (9); and
    - to determine a type of a transmission medium (12) of the connecting path (6) on the basis of the maximum speed (11),
    and at least comprises
    - a microprocessor (402),
    - a volatile memory (404) and nonvolatile memory (406),
    - at least two communication interfaces (408),
    - a synchronizable timer 410,

       the nonvolatile memory (406) contains program instructions that are executed by the microprocessor (402),
       **characterized in that** at least one embodiment of the method according to Claims 1 to 10 can be implemented and carried out.

13. Ethernet onboard network (2) for a motor vehicle (1), having a first control unit (3) and a second control unit (4), wherein the control units (3, 4) are connected to one another by way of at least one connecting path (6, 7), and the first control unit (3) is designed according to Claim 11.

14. Ethernet onboard network according to Claim 11, **characterized in that** the Ethernet onboard network (2) has a third control unit (5), which is connected to the first control unit (3) only indirectly and is connected to the second control unit (4) directly by way of a third connecting path (8), wherein the third control unit (5) is designed to determine a propagation time (21) of a third signal (22) on the third connecting path (8), wherein the first control unit (3) is designed to trigger the determination of the propagation time (21) of the third signal (22) by way of a service message (20) to the third control unit (5).

15. Computer program product comprising commands that, when the program is executed by a computer, cause said computer to carry out the method (200) according to one or more of Claims 1-10.

16. Computer-readable medium on which the computer program product according to Claim 14 is stored.

17. Vehicle having an Ethernet onboard network comprising multiple control units (3, 4, 5) according to Claim 12.

**Revendications**

1. Procédé permettant de vérifier la validité de données de capteur d'un réseau de bord Ethernet (2) dans un véhicule automobile (1), dans lequel les étapes suivantes sont exécutées :

    d) déterminer un temps de propagation (9) d'un premier signal (10) sur un premier trajet de liaison (6) entre une première unité de commande (3) du réseau de bord Ethernet (2) et une deuxième unité de commande (4) du réseau de bord Ethernet (2) ;
    e) déterminer une vitesse maximale (11) du premier trajet de liaison (6) à l'aide du temps de propagation (9) ; et

f) déterminer un type d'un support de transmission (12) du premier trajet de liaison (6) à l'aide de la vitesse maximale (11),

**caractérisé en ce que** les étapes suivantes sont exécutées :

- identifier au moins une première unité de commande (3) du réseau de bord Ethernet (2) ;
- synchroniser au moins une première unité de commande (3) du réseau de bord Ethernet (2) ;
- établir l'intervalle de synchronisation de la première unité de commande (3) ;
- établir une dérive d'un temporisateur (410) de la première unité de commande (3) ;
- établir un horodatage de la première unité de commande (3) ;
- lire un horodatage de la première unité de commande (3) ;
- comparer l'horodatage de la première unité de commande (3) avec une horloge de référence du réseau de bord Ethernet (2) ;
- effectuer une mesure de temps de propagation de la première unité de commande (3) ;
- établir la vitesse du générateur d'horloge associé ;
- établir la différence de temps de l'intervalle de synchronisation ;
- établir la dernière synchronisation quand la dernière synchronisation réussie d'un noeud a eu lieu et depuis quand l'unité de commande (3) du noeud n'a pas été synchronisée.

2. Procédé selon la revendication 1, **caractérisé en ce que** l'établissement de la dérive du temporisateur est effectué au moyen du protocole IEEE 802.1AS.D8.3.

3. Procédé selon la revendication 1 ou 2, **caractérisé en ce que** la comparaison de l'horodatage avec une horloge de référence du réseau de bord Ethernet (3) comprend une soustraction sous la forme Técart = Tréference-Tsuspect.

4. Procédé selon l'une quelconque des revendications 1 à 3, **caractérisé en ce que** la vitesse du générateur d'horloge est établie au moyen du procédé PTP neighbor rate ratio, NRR.

5. Procédé selon l'une quelconque des revendications 1 à 4, **caractérisé en ce que** le type du support de transmission (12) et

- l'établissement de l'intervalle de synchronisation,
- l'établissement d'une dérive d'un temporisateur (410) de la première unité de commande (3),
- l'établissement d'un horodatage de la première unité de commande (3),
- l'établissement de la vitesse du générateur d'horloge associé,
- l'établissement de la différence de temps de l'intervalle de synchronisation,
- l'établissement de la dernière synchronisation quand la dernière synchronisation réussie d'un noeud a eu lieu et depuis quand l'unité de commande (3) du noeud n'a pas été synchronisée

sont communiqués à un programme (13) dans le réseau de bord Ethernet (2), et une sélection de trajet de liaison (14) du programme (13) est adaptée en fonction du type du support de transmission (12).

6. Procédé selon l'une quelconque des revendications 1 à 5, **caractérisé en ce que** le type du support de transmission (12) est déterminé comme étant optique, cuivre ou sans fil.

7. Procédé selon l'une quelconque des revendications précédentes, **caractérisé en ce qu'**une valeur de sécurité de transmission (15) qui décrit une probabilité de perte de données transmises par le premier trajet de liaison (6) est attribuée au premier trajet de liaison (6) à l'aide du type du support de transmission (12).

8. Procédé selon l'une quelconque des revendications précédentes, **caractérisé en ce que** les temps de propagation d'une pluralité de signaux sur le premier trajet de liaison (6) sont déterminés, et le temps de propagation le plus rapide de la pluralité des signaux est sélectionné, la vitesse maximale (11) du premier trajet de liaison (6) étant déterminée à l'aide du temps de propagation le plus rapide.

9. Procédé selon l'une quelconque des revendications précédentes, **caractérisé en ce qu'**un temps de propagation (16) d'un deuxième signal (17) sur un deuxième trajet de liaison (7) différent du premier trajet de liaison (6) entre la première unité de commande (3) et la deuxième unité de commande (4) est déterminé, et une vitesse maximale (11) du deuxième trajet de liaison (7) est déterminée, dans lequel un type du support de transmission (19) du deuxième trajet de liaison (7) est déterminé à l'aide de la vitesse maximale (11) du deuxième trajet de liaison (7).

10. Procédé selon l'une quelconque des revendications précédentes, **caractérisé en ce que** le procédé est effectué après un changement de la première unité de commande (3) d'un mode de fonctionnement normal vers un mode d'économie d'énergie et/ou d'un mode d'économie d'énergie vers le mode de fonctionnement normal.

11. Procédé selon l'une quelconque des revendications précédentes, **caractérisé en ce que** le temps de propagation (9) du premier signal (10) est déterminé par la première unité de commande (3), et un temps de propagation (21) d'un troisième signal (22) est déterminé par la troisième unité de commande (5) sur un troisième trajet de liaison (8) relié indirectement seulement à la première unité de commande (3) entre la deuxième unité de commande (4) et une troisième unité de commande (5) du réseau de bord Ethernet (2), dans lequel la détermination du temps de propagation (21) du troisième signal (22) est déclenchée par un message de service (20) envoyé par la première unité de commande (3) à la troisième unité de commande (5).

12. Unité de commande pour un réseau de bord Ethernet (2) qui en tant que première unité de commande (3) est réalisée pour :

- envoyer un signal (10) à une deuxième unité de commande (4) du réseau de bord Ethernet (2) et recevoir le signal (10) de la deuxième unité de commande (4) ;
- déterminer un temps de propagation (9) du signal (10) sur un trajet de liaison (6) à la deuxième unité de commande (4) ;
- déterminer une vitesse maximale (11) du trajet de liaison (6) à l'aide du temps de propagation (9) ; et
- déterminer un type d'un support de transmission (12) du trajet de liaison (6) à l'aide de la vitesse maximale (11),
comprenant au moins
- un microprocesseur (402),
- une mémoire volatile (404) et une mémoire non volatile (406),
- au moins deux interfaces de communication (408),
- un temporisateur (410) pouvant être synchronisé,

la mémoire non volatile (406) contenant des instructions de programme qui sont exécutées par le microprocesseur (402),
**caractérisée en ce qu'**au moins une configuration du procédé selon les revendications 1 à 10 peut être mise en oeuvre et exécutée.

13. Réseau de bord Ethernet (2) pour un véhicule automobile (1), comprenant une première unité de commande (3) et une deuxième unité de commande (4), dans lequel les unité de commande (3, 4) sont reliées ensemble par au moins un trajet de liaison (6, 7), et la première unité de commande (3) est réalisée selon la revendication 11.

14. Réseau de bord Ethernet selon la revendication 11, **caractérisé en ce que** le réseau de bord Ethernet (2) présente une troisième unité de commande (5) qui est relié indirectement seulement à la première unité de commande (3) et est reliée directement à la deuxième unité de commande (4) par un troisième trajet de liaison (8), dans lequel la troisième unité de commande (5) est réalisée pour déterminer un temps de propagation (21) d'un troisième signal (22) sur le troisième trajet de liaison (8), dans lequel la première unité de commande (3) est réalisée pour déclencher la détermination du temps de propagation (21) du troisième signal (22) par un message de service (20) adressé à la troisième unité de commande (5).

15. Produit de programme informatique comprenant des instructions qui, lorsque le programme est exécuté par un ordinateur, amènent celui-ci à exécuter le procédé (200) selon l'une ou plusieurs des revendications 1 à 10.

16. Support lisible par ordinateur sur lequel est enregistré le produit de programme informatique selon la revendication 14.

17. Véhicule comprenant un réseau de bord Ethernet qui comprend plusieurs unités de commande (3, 4, 5) selon la revendication 12.

Fig. 1b

Fig. 1a

Identifikation einer Komponente (ECU/µC/...)

Synchronisation (mit einer ECU oder einer CPU oder einem Steuergerät) und Ermittlung des Driftes dessen Uhr

Ermittlung des Synchronisationsintervalls

Ermittlung der Abweichung in Frequenzdrift und Zeit

Ermittlung eines Zeitstempels der ersten Steuereinheit

Auslesen eines Zeitstempels oder Abfrage der Uhrzeit

Vergleich des Zeitstempels mit einer Referenzuhr

Durchführung von Laufzeitmessungen

Ermittlung der Geschwindigkeit dessen Taktgebers

Ermittlung der Geschwindigkeit dessen Taktgebers

Ermittlung des Synchronisationsintervalls

Ermittlung der letzten erfolgreichen Synchronisation

Fig. 2

Fig. 3

EP 4 078 863 B1

Uhr/Takt des Sensors
(synchron nur zu Sync-Zeitpunkten)

Ungenauigkeit

Referenzuhr, z. B.
Von einer Sensorfusion

Fig. 4

Sync-Intervall | Sync-Intervall | Sync-Intervall | Sync-Intervall

Zeit

EP 4 078 863 B1

Fig. 5

EP 4 078 863 B1

Sensor    Sensorfusion

Pdelay_request

t1

(t1)    t2

t1n

(t1n)    t2n

Fig. 6a

Berechnung der maximalen Abweichung ← Synchronisationsintervall
Taktgebergeschwindigkeit

Ermittlung des Zeitpunktes der letztmaligen
erfolgreichen Synchronisierung

Fig. 6b

EP 4 078 863 B1

EP 4 078 863 B1

```
┌─────────────────────────────────────────────────────┐
│                      ↓                                │
│   ┌─────────────────────────────────────────────┐    │
│   │       Start der Verzögerungsmessung         │    │
│   └─────────────────────────────────────────────┘    │
│                      ↓                                │
│   ┌─────────────────────────────────────────────┐    │
│   │      Aussenden von Linkmessungsnachrichten   │    │
│   └─────────────────────────────────────────────┘    │
│                      ↓                                │
│   ┌─────────────────────────────────────────────┐    │
│   │     Empfang von Synchronisationsnachrichten  │    │
│   └─────────────────────────────────────────────┘    │
│                      ↓                                │
│   ┌─────────────────────────────────────────────┐    │
│   │   Bestimmung der Verzögerung zum Linkpartner │    │
│   └─────────────────────────────────────────────┘    │
│                      ↓                                │
│   ┌─────────────────────────────────────────────┐    │
│   │        Speichern des aktuellen Wertes        │    │
│   └─────────────────────────────────────────────┘    │
│                                                       │
└───────────────────────────────────────────────────────┘
```

Zyklisch wiederholend

Fig. 7

```
┌─────────────────────────────────────────────────────────┐
│   ↓                                                       │
│  ┌──────────────────────────────────────────────────┐    │
│  │         Start der Frequenzmessung                 │    │
│  └──────────────────────────────────────────────────┘    │
│                        ↓                                  │
│  ┌──────────────────────────────────────────────────┐    │
│  │    Empfang von Synchronisationsnachrichten         │    │
│  └──────────────────────────────────────────────────┘    │
│                        ↓                                  │
│  ┌──────────────────────────────────────────────────┐    │
│  │    Bestimmung der Nachrichtenfrequenz des          │    │
│  │              Linkpartners                           │    │
│  └──────────────────────────────────────────────────┘    │
│                        ↓                                  │
│  ┌──────────────────────────────────────────────────┐    │
│  │       Speichern des aktuellen Wertes               │    │
│  └──────────────────────────────────────────────────┘    │
│                                                           │
└─────────────────────────────────────────────────────────┘
```

Zyklisch wiederholend

Fig. 8

EP 4 078 863 B1

```
┌─────────────────────────────────┐
│                                 ▼
│      ┌──────────────────────────────────────┐
│      │   Generierung des Schlüssels          │
│      └──────────────────────────────────────┘
│                        │
│                        ▼
│      ┌──────────────────────────────────────┐        ┌──────────────────────────────────┐
│      │  Berechnung von Linkmessung und      │───────▶│  Berechnung von Linkmessung        │
│      │          Frequenz A1                  │        │     und Frequenz A2                │
│      └──────────────────────────────────────┘        └──────────────────────────────────┘
│                        │
│                        ▼
│      ┌──────────────────────────────────────┐
│      │   Generierung des Schlüssels aus A1   │
│      └──────────────────────────────────────┘
│                        │
│                        ▼
│      ┌──────────────────────────────────────┐
│      │   Verschlüsselung der Nachricht       │
│      └──────────────────────────────────────┘
│                        │
│                        ▼
│      ┌──────────────────────────────────────┐
│      │   Versenden der Nachricht             │
│      └──────────────────────────────────────┘
│                        │
│                        ▼
│      ┌──────────────────────────────────────┐
│      │   Entschlüsselung der Nachricht       │◀──────
└──────└──────────────────────────────────────┘
```

Fig. 9

Zyklisch wiederholend

```
┌─────────────────────────────────────┐
│                 S1                   │
└─────────────────────────────────────┘
                  │
                  ▽
┌─────────────────────────────────────┐
│                 S2                   │
└─────────────────────────────────────┘
                  │
                  ▽
┌─────────────────────────────────────┐
│                 S3                   │
└─────────────────────────────────────┘
                  │
                  ▽
┌─────────────────────────────────────┐
│                 S4                   │
└─────────────────────────────────────┘
                  │
                  ▽
┌─────────────────────────────────────┐
│                 S5                   │
└─────────────────────────────────────┘
```

Fig. 10

EP 4 078 863 B1

S4

S3

23

24

25

26

27

13

14

Fig. 11

Fig. 12

S10

S12

S11

S13

S14

S15

Fig. 13

Fig. 14

Empfange Sensordaten

Prüfe letztmalige Synchronisation

Ist der Wert vertrauenswürdig

Nein, Grenzwert überschritten

Daten sollten nicht verwendet werden

ja

Daten können genutzt werden

Fig. 15

Fig. 16

3, 4, 5

Standard Steuereinheit

Memory

Microcontroller

I/O

404, 404

402 und
410

412

EP 4 078 863 B1

EP 4 078 863 B1

```
┌─────────────────────────────────────────┐
│  Empfang einer verschlüsselten Nachricht │ ⟵ 1001
└─────────────────────────────────────────┘
                    │
                    ▼
┌─────────────────────────────────────────┐
│ Optional: Messung der Leitungsverzögerung und │ ⟵ 1002
│ Frequenzmessung starten                  │
└─────────────────────────────────────────┘
                    │
                    ▼
┌─────────────────────────────────────────┐
│  Anfrage der letzten Leitungsmessung     │ ⟵ 1003
│  und Frequenzparameter                   │
└─────────────────────────────────────────┘
                    │
                    ▼
┌─────────────────────────────────────────┐
│       Generierung des Schlüssels         │ ⟵ 1004
└─────────────────────────────────────────┘
                    │
                    ▼
┌─────────────────────────────────────────┐
│     Entschlüsselung der Nachricht        │ ⟵ 1005
└─────────────────────────────────────────┘
                    │
                    ▼
```

Fig. 17

Fig. 18

EP 4 078 863 B1

Fig. 19

EP 4 078 863 B1

| Frame (Daten + Zeitstempel) T1 | Frame (Daten + Zeitstempel) T1 | Frame (Daten + Zeitstempel) T2 | Frame (Daten + Zeitstempel) T2 | Frame (Daten + Zeitstempel) T1 | Frame (Daten + Zeitstempel) T1 | Frame (Daten + Zeitstempel) T4 | ⟹ | Eintreffen der Daten bei der Fusionseinheit/ Datenrekorder |
|---|---|---|---|---|---|---|---|---|

Sortierung/Fusion/Speicherung nach auf Basis des Zeitstempels (T1)

| Frame (Daten + Zeitstempel) T1 | Frame (Daten + Zeitstempel) T1 | Frame (Daten + Zeitstempel) T1 | Frame (Daten + Zeitstempel) T1 |
|---|---|---|---|

Sortierung/Fusion/Speicherung nach auf Basis des Zeitstempels (T2)

| Frame (Daten + Zeitstempel) T2 | Frame (Daten + Zeitstempel) T2 |
|---|---|

Fig. 20

EP 4 078 863 B1

| Frame (Daten + Zeitstempel) T1 | Frame (Daten + Zeitstempel) T1 | Frame (Daten + Zeitstempel) T2 | Frame (Daten + Zeitstempel) T2 | Frame (Daten + Zeitstempel) T1 | Frame (Daten + Zeitstempel) Falsch T1 | Frame (Daten + Zeitstempel) T4 |
|---|---|---|---|---|---|---|

Eintreffen der Daten bei der Fusionseinheit/ Datenrekorder

Zeitstempel ist falsch

Daten sind ungültig bzw. liefern falsche Ergebnisse

| Frame (Daten + Zeitstempel) T1 | Frame (Daten + Zeitstempel) T1 | Frame (Daten + Zeitstempel) T1 | Frame (Daten + Zeitstempel) Falsch T1 |
|---|---|---|---|

Fig. 21

EP 4 078 863 B1

```
┌─────────────────────────────────────────────┐
│ Untersuchung eines abgespeicherten Datensatzes einer  │ ⇐  Trigger z.B. gibt das ein Datenrekorder,
│ Komponente (Sensordatenstrom) (z.B. Adresse, Stream,  │    Cloud-Speicher in Auftrag
│ Zeitstempel)                                  │
└─────────────────────────────────────────────┘
                      │
                      ▼
┌─────────────────────────────────────────────┐
│ Prüfe letztmalige erfolgreiche Synchronisation        │
└─────────────────────────────────────────────┘
                      │
                      ▼
┌─────────────────────────────────────────────┐
│ Ermittlung des Zeitpunktes zu dem Daten das letzte Mal │
│ gültig waren                                  │
└─────────────────────────────────────────────┘
                      │
                      ▼
┌─────────────────────────────────────────────┐
│ Prüfe Speicher und verwerfe die nicht-korrekt-        │
│ synchronen Datensätze                         │
└─────────────────────────────────────────────┘
```

# Fig. 22

**IN DER BESCHREIBUNG AUFGEFÜHRTE DOKUMENTE**

**In der Beschreibung aufgeführte Patentdokumente**

- EP 2759174 A1
- EP 2490357 A2
- US 2008183896 A1
- EP 2191300 A1
- EP 2382829 A1
- WO 2019197233 A1
- WO 2019081463 A1
- DE 102018207684 A1